# EUROPEAN PATENT APPLICATION

(11) **EP 4 790 569 A1**
(43) Date of publication of application: **12.08.2026**
(21) Application number: 25178625.7
(22) Date of filing: 23.05.2025
(51) Int. Cl.: G06F 16/36, G06F 16/683, G06F 16/901, G06F 40/258, G06F 40/295, G06F 16/93

(54) **LANGUAGE MODEL-BASED ENTITY EXTRACTION AND RESOLUTION**

(30) Priority: 07.02.2025 US 202563755638 P; 25.04.2025 US 202519189971
(71) Applicant: Palantir Technologies Inc., Aventura, Florida 33180 (US)
(72) Inventor: CHOI, Jonathan, Denver, 80202 (US); CHEN, Catherine, Denver, 80202 (US); ALPEZA, Eugen, Denver, 80202 (US); KARAMANLAKIS, Ioannis, Denver, 80202 (US)
(74) Representative: Jolliffe, Jack Louis

(57) **Abstract**

Computer-implemented systems and methods are disclosed, including systems and methods utilizing language models for extracting and resolving entities mentioned in unstructured text data. A computer-implemented method may include at least: receiving first text data from a data source; generating and transmitting a first prompt for a large language model ("LLM"), the first prompt comprising the first text data; receiving a first output from the LLM in response to the first prompt; generating, based at least on the first output, and transmitting a second prompt to the LLM; receiving a second output from the LLM in response to the second prompt, the second output comprising first one or more entities extracted by the LLM from the first part of the first semantically related text portion and first metadata or context associated with the first one or more entities.

## Description

### CROSS-REFERENCE TO RELATED APPLICATIONS

This application claims benefit of U.S. Provisional Patent Application No. 63/755638, filed February 7, 2025, and titled "LANGUAGE MODEL-BASED ENTITY EXTRACTION AND RESOLUTION." The entire disclosure of each of the above items is hereby made part of this specification as if set forth fully herein and incorporated by reference for all purposes, for all that it contains.

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for utilizing computer-based models. More specifically, the present disclosure relates to computerized systems and techniques for using language models to process text data.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. A computer-based ontology may be used to model a view of, or provide a template for, what objects or entities exist in the world, what their properties are, and how they are related to each other.

### SUMMARY

The systems, methods, and devices described herein each have several aspects, no single one of which is solely responsible for its desirable attributes. Without limiting the scope of this disclosure, several non-limiting features will now be described briefly.

Existing methods for analyzing media content such as audio transcripts or other unstructured text often rely on keyword matching or string similarity to identify, extract, and/or resolve entities mentioned. These methods can be limited in their ability to handle variability or errors in audio transcripts that are rife with misspellings, nicknames, aliases, pronouns, and/or other variations in entity mentions. As a result, entities may be missed or incorrectly identified, extracted, and/or resolved. Additionally, these methods may not fully utilize metadata or context associated with entities mentioned, where the metadata or context can be useful for accurate entity extraction and resolution. Further, it may be desirable to implement a system that can automatically update and enrich its database to efficiently and accurately identify the same entity mentioned across various data sources.

The present disclosure describes systems and methods (generally collectively referred to herein as an "entity processing system" or simply a "system") that can advantageously overcome various of the technical challenges mentioned above, among other technical challenges. More specifically, various implementations of the systems and methods of the present disclosure can advantageously utilize one or more large language models ("LLM") for an entity processing pipeline to extract entities and associated metadata or context from unstructured text (e.g., audio transcripts), thereby automatically extracting and resolving entities mentioned accurately. The system can further streamline the process of enriching its database defined by an ontology by automatically adding and/or updating data objects to represent entities mentioned across various data sources, achieving accurate and comprehensive linking of entities to their respective metadata, context, and/or sources. By employing various implementations of the systems and methods utilizing LLMs and/or ontology described herein, the system can accurately extract and resolve entities mentioned in unstructured data, and automatically update its database as new mentions of entities are detected with full attribution to link when and/or where each entity was mentioned. Advantageously, the system can accomplish accurate, automatic, and efficient entity extraction and resolution with reduced or without human interventions. In some examples, the method performs steps to structure the inputs and outputs of LLMs to achieve more accurate and efficient performance of LLMs models in the context of analysis of unstructured text data.

Various implementations of the present disclosure provide improvements to various technologies and technological fields. For example, as described above, the system may advantageously use an LLM-based entity processing pipeline to extract entities from unstructured text data (e.g., audio transcript and/or other text data) and determine if extracted entities match an entity represented by a data object stored in a database defined by an ontology. Other technical benefits provided by various implementations of the present disclosure include, for example, executing similarity searches for efficiently processing unstructured text data, updating and/or enriching the ontology, and generating graphs to effectively match extracted entities and known entities.

Additionally, various implementations of the present disclosure are inextricably tied to computer technology. In particular, various implementations rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various implementations cannot reasonably be performed by humans alone, without the computer technology upon which they are implemented. Further, the implementation of the various implementations of the present disclosure via computer technology enables many of the advantages described herein, including more efficient interaction with, and presentation of, various types of electronic data.

According to various implementations, large amounts of data are automatically and dynamically calculated or processed interactively in response to user inputs, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein are improved methods for utilizing machine learning, natural language processing, and/or interactive visualization techniques to automatically aggregate information received from data source(s) into database(s) as data objects defined by an ontology, or allow efficient update on the ontology to include data objects for representing information that was previously undefined by the ontology. Advantageously, the system can streamline the process of enriching databases or updating the ontology through automation to generate customized or updated ontology in a short period of time. Additionally, the system can more reliably or repeatedly update the ontology based on new information by employing one or more large language models ("LLMs") and data analysis techniques to extract, search, match and/or process data from data sources (e.g., audio transcripts, unstructured text data, documents, emails, article, or the like). Further, the system can present interactive graphical user interface(s) through visualization techniques to allow users more easily and efficiently identify relevant information and key relationships contained in data from data sources in consistent with objectives of an organization.

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented and/or computerized methods are disclosed in which, by one or more processors executing program instructions, one or more aspects of the above- and/or below-described implementation (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 is a block diagram illustrating an example entity processing system in an example computing environment, according to various implementations of the present disclosure;
FIG. 2A depicts a block diagram of an example entity processing system, according to various implementations of the present disclosure;
FIG. 2B depicts a block diagram of an example entity resolution module, according to various implementations of the present disclosure;
FIG. 3 illustrates an object-centric conceptual data model, according to various embodiments of the present disclosure;
FIG. 4 illustrates an example graphical representation of similar entities that is generated by an example entity processing system, according to various implementations of the present disclosure;
FIG. 5 is a flowchart depicting an example routine for utilizing one or more LLMs to extract and/or resolve entities from unstructured text data, according to various implementations of the present disclosure;
FIGS. 6A and 6B are flowcharts illustrating example routines for generating prompts to one or more LLMs for segmenting and/or extracting entities from unstructured text data, according to various implementations of the present disclosure;
FIG. 7 is a flowchart illustrating example routines for adding and linking data objects into a database to represent entity related information, according to various implementations of the present disclosure;
FIG. 8 is a flowchart illustrating example routines for merging semantically related text portions from various text data to facilitate entity extraction and resolution, according to various implementations of the present disclosure; and
FIG. 9 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

As mentioned above, existing methods for analyzing media content such as audio transcripts or other unstructured text often rely on keyword matching or string similarity to identify, extract, and/or resolve entities mentioned. These methods can be limited in their ability to handle variability or errors in audio transcripts that are rife with misspellings, nicknames, aliases, pronouns, and/or other variations in entity mentions. As a result, entities may be missed or incorrectly identified, extracted, and/or resolved, which may necessitate further significant human intervention for correction. Additionally, these methods may not fully utilize metadata or context associated with entities mentioned, where the metadata or context can be useful for accurate entity extraction and resolution. Further, it may be desirable to implement a system that can automatically update and enrich its database to efficiently and accurately identify the same entities mentioned across various data sources. While the methods described in detail below focus on audio transcripts, the techniques may be applied to other unstructured text documents, such as written notes or text data extracted from written sources.

As also noted above, the present disclosure describes systems and methods (generally collectively referred to herein as an "entity processing system" or simply a "system") that can advantageously overcome various of the technical challenges mentioned above, among other technical challenges. More specifically, various implementations of the systems and methods of the present disclosure can advantageously utilize one or more large language models ("LLM") for an entity processing pipeline to extract entities and associated metadata or context from unstructured text (e.g., audio transcripts), thereby automatically extracting and resolving entities mentioned accurately. The system can further streamline the process of enriching its database defined by an ontology by automatically adding and/or updating data objects to represent entities mentioned across various data sources, achieving accurate and comprehensive linking of entities to their respective metadata, context, and/or sources. By employing various implementations of the systems and methods utilizing LLMs and/or ontology described herein, the system can accurately extract and resolve entities mentioned in unstructured data, and automatically update its database as new mentions of entities are detected with full attribution to link when and/or where each entity was mentioned. Advantageously, the system can accomplish accurate, automatic, and efficient entity identification, extraction, and/or resolution with reduced or without human interventions.

More specifically, the system may receive text data (e.g., unstructured data) from a data source. The text data can be at least a portion of an audio transcript (and/or other text data), lack a predefined format or structure, and/or may contain errors, misspellings, and variations (e.g., nicknames, aliases, pronouns, or the like) associated with entities mentioned in the text data. A semantically related text portion may be a portion of text that is grouped by a shared semantic content. For example, the semantically related text portion may be a portion of text relating to a single topic or concept. The system may generate a first prompt for a LLM and transmit the first prompt to the LLM, where the first prompt may include at least the text data. In response to the first prompt, the system may receive a first output from the LLM. The first output may include one or more identification numbers that identify one or more semantically related text portions of the text data. Each of the one or more semantically related text portions may correspond to a single topic discussed in the audio transcript. Based on the first output, the system may generate and transmit a second prompt to the LLM. The second prompt may include at least a first part of a first semantically related text portion of the one or more semantically related text portions, and first one or more suggested entities associated with the first part of the first semantically related text portion. In response to the second prompt, the system may receive a second output from the LLM. The second output may include at least first one or more entities extracted by the LLM from the first part of the first semantically related text portion, and first metadata or context associated with the first one or more entities.

Based on the first one or more entities, the system may further execute a similarity search (e.g., using string similarity) to identify first one or more similar entities from the first one or more entities extracted by the LLM. The system may generate and transmit a third prompt to the LLM, where the third prompt includes at least the first one or more similar entities. In response to the third prompt, the system may receive a third output from the LLM. The third output may include at least a first entity to which the first one or more similar entities correspond or are resolved. The system may then utilize the LLM to determine, based at least on the first entity, the first metadata or context, and a plurality of entities represented by a plurality of data objects stored in a database defined by an ontology, whether the first entity matches any entity of the plurality of entities. In response to determining that the first entity matches an entity of the plurality of entities represented by a data object of the plurality of data objects, the system may update the data object stored in the database to represent at least the entity and the first entity. In response to determining that the first entity does not match any entity of the plurality of entities, the system may add into the database another data object to represent the first entity extracted and resolved from the text data.

### Example Aspects Related to Text Segmentation

The system may utilize one or more LLMs to process text data to identify or segment semantically related text portions of the text data for further analysis. As noted above, the system may receive text data (e.g., unstructured data such as an audio transcript) from a data source. The system can divide or segment the audio transcript into multiple segments. For example, the system may segment the audio transcript into at least first text data and second text data, where the first text data and the second text data form at least a portion of the audio transcript and the second text data immediately follows the first text data in the audio transcript. Advantageously, segmenting the audio transcript into at least the first text data and the second text data can limit the amount of data a LLM is tasked to process in one LLM prompt, and/or help break down or reduce size of context the LLM is tasked to process. As such, the LLM may be less likely to hallucinate (e.g., less likely to lose track of the context). The system may further employ the one or more LLMs to semantically chunk the first text data and the second text data respectively.

For example, the system may generate and transmit a first prompt to a LLM, where the first prompt includes at least the first text data. In generating the first prompt, the system can additionally and/or optionally add a plurality of identification numbers into the first text data to identify a plurality of portions of the first text data. For example, the system can add or insert indexes such as [0], [1], [2], [3], [4], [5], ... [32], into the first text data to indicate beginning and/or end of various portions (e.g., sections, paragraphs, or speaker-corresponding portions) of the first text data. As a more specific example, index [0] can indicate beginning of a first paragraph of the first text data, index [1] can indicate beginning of a second paragraph of the first text data, and so forth. As will be described below, these indexes can advantageously allow the LLM to more efficiently generate output identifying semantically related text portions of the first text data.

In response to the first prompt, the system may receive a first output from the LLM, where the first output includes at least one or more identification numbers that identify first one or more semantically related text portions of the first text data. For example, the first output may include index [0], index [5], and index [32] to indicate that text between index [0] and index [5] is associated with a first topic discussed in the audio transcript, and text between index [5] and index [32] is associated with a second topic discussed in the audio transcript. Similarly, the LLM may output indexes (e.g., index [35], index [42], index [45], or the like) to identify second one or more semantically related text portions of the second text data. By outputting the indexes that identify one or more semantically related text portions rather than the one or more semantically related text portions themselves, the size of the first output can be reduced, making the LLM more efficient or cost-effective.

In some embodiments, the system may further utilize one or more LLMs to merge text portions from the first text data and the second text data that are semantically related with each other to form a single semantically related text portion. For example, as noted above, outputs from the LLM may identify first one or more semantically related text portions of the first text data and second one or more semantically related text portions of the second text data, where the second text data immediately follows the first text data in the audio transcript. The system may generate and transmit a prompt to the LLM that includes at least a last semantically related text portion (e.g., a text portion identified by and after the index [32]) of the first one or more semantically related text portions and a first semantically related text portion (e.g., a text portion identified by and before the index [35]) of the second one or more semantically related text portions. In response to the prompt, the LLM may generate an output indicating that the last semantically related text portion of the first one or more semantically related text portions and the first semantically related text portion of the second one or more semantically related text portions are semantically related with each other (e.g., associated with a single topic discussed in the audio transcript). Based on the output, the system may merge the last semantically related text portion of the first one or more semantically related text portions and the first semantically related text portion of the second one or more semantically related text portions to form a single semantically related text portion. The system may further employ the LLM to chunk the single semantically related text portion into one or more parts for further analysis (e.g., entity extraction and resolution associated with the one or more parts). Advantageously, the system can fully and/or more flexibly merge segments of the audio transcript that correspond to the same topic for achieving more accurate entity extraction and resolution.

In some embodiments, the system can further segment a semantically related text portion into various parts, and utilize one or more LLMs to extract entities based on the various parts. For example, for each of the first one or more semantically related text portions of the first text data, the system can segment a semantically related text portion into one or more parts. Each of the one or more parts may include several sentences, hundreds of tokens, or the like, where a size of each part may be determined based on a context window associated with the LLM. For each part, the system may generate a prompt for the LLM to extract entities mentioned in the part. Advantageously, tasking the LLM to extract entities from a part that does not exceed the context window associated with the LLM can avoid "attention" issues of LLM, which tend to occur when the LLM is tasked to extract entities from text data (e.g., a semantically related text portion, a long paragraph in an audio transcript, or the like) longer or larger than the context window. As a result, the LLM may be less likely to miss entity, and may be able to fully capture or extract any entities mentioned in the audio transcript.

Additionally and/or optionally, the system may generate one or more suggested entities for the LLM to perform entity extraction for each of the one or more parts. For example, the system may utilize a detection model (e.g., a natural language detection model such as a SpaCy model, a language detection model that is less costly than LLM) to detect one or more suggested entities associated with a first part of a first semantically related text portion of the first text data. The one or more suggested entities may include pronouns, names, aliases, nicknames, or the like mentioned in the first part of the first semantically related text portion. The detection model may also generate one or more attributes associated with the one or more suggested entities. The one or more attributes may specify that the one or more suggested entities correspond to person(s) and/or organization(s), or specify other attributes (e.g., occupations, identities, or the like) associated with the one or more suggested entities. The system may generate a second prompt for a LLM that includes at least the first part of the first semantically related text portion of the first text data and the one or more suggested entities associated with the first part of the first semantically related text portion for the LLM to extract entities.

Additionally and/or optionally, the second prompt may indicate to the LLM that the one or more suggested entities and/or the one or more attribute associated with the one or more suggested entities are prone to error. For example, the one or more suggested entities may include "Levron James," "Lebron James," "James," "LBJ," and/or other aliases and/or misspellings associated with an entity, and the second prompt may indicate to the LLM that some of the one or more suggested entities may not correctly identify an entity. As another example, the second prompt may indicate to the LLM that an attribute associated with a suggested entity may be erroneous (e.g., a suggested entity indicated as an organization by the attribute may in fact represent a person).

### Example Aspects Related to Entity Extraction

As noted above, the system may utilize one or more LLMs to extract entities mentioned in an audio transcript. For example, in response to the second prompt, the LLM may generate a second output that includes at least one or more entities extracted from a part of a semantically related text portion and metadata or context associated with the one or more entities. For example, the second output may include at least an entity (e.g., "Lebron James") extracted by the LLM and metadata or context (e.g., basketball player rather than an electrical engineer) associated with the entity extracted by the LLM from the audio transcript. Advantageously, by utilizing LLM to identify metadata or context associated with extracted entities for further use, the system may be able to more accurately extract or resolve entities from unstructured data such as the audio transcript.

### Example Aspects Related to Entity Resolution

Based on entities extracted by one or more LLMs, the system may further utilize data processing techniques and/or the one or more LLMs to resolve entities. In some embodiments, using at least one or more entities extracted by a LLM, the system may execute a similarity search to identify one or more similar entities from the one or more entities extracted by the LLM. For example, the one or more entities extracted by the LLM may include "Lebron James," "Jonas Sanders," "Jones Sander," and "James." The system may utilize string similarity search techniques (e.g., Jaccard, Jaro-Winkler, Levenshtein, or the like) to group the one or more entities into the one or more similar entities (e.g., grouping "Lebron James" and "James" into first one or more similar entities, and grouping "Jonas Sanders" and "Jones Sander" into second one or more similar entities).

The system can further generate a third prompt including at least the first one or more similar entities for the LLM to perform entity resolution. Rather than generating a prompt that includes all the entities extracted by the LLM, grouping the one or more entities into one or more similar entities and prompting the LLM to resolve the one or more similar entities can advantageously allow the LLM to more accurately resolve entities (e.g., by avoiding letting the LLM resolve too many entities at the same time that may also lead to "attention" issues associated with the LLM).

In response to the third prompt, the system can receive a third output from the LLM that includes at least a first entity to which the one or more similar entities correspond or resolve. For example, in response to the third prompt that includes "Lebron James," "Levron James," and "James," the third output from the LLM may include "Lebron James" to which "Lebron James," "Levron James," and "James" correspond or resolve. Additionally and/or optionally, the one or more entities, the one or more similar entities, and/or the first entity can each be associated with an identification number (ID) for further linking and/or other managing purposes.

### Example Features Related to Data Objects, Entity Enrichment, and Linking

In some embodiments, the system may employ database(s) that uses an ontology and data objects to store, represent and/or organize data utilized by the system. The system may manage an ontology to update data objects (e.g., updating a data object to represent various entities that correspond to the same entity) and/or add data objects (e.g., adding a data object to represent an entity mentioned in a newly released audio transcript) into one or more databases associated with the ontology to enrich the ontology, databases and/or knowledge bases of an organization. As such, data utilized by the system may be organized and linked (e.g., through use of identification numbers or other types of identifiers) to relevant context for providing a comprehensive knowledge base for reference and/or analysis.

In various implementations, a body of data may be conceptually structured according to an object-centric data model represented by the ontology. The ontology may include stored information providing a data model for storage of data in the database. The ontology may be defined by one or more data object types, which may each be associated with one or more property types. At the highest level of abstraction, a data object of a data object type may be a container for information representing things in the world. For example, a data object can represent an entity (e.g., a person or an organization), document, and/or other unstructured data source such as an audio transcript, a portion of the audio transcript, an e-mail message, a news report, or a written paper or article. Additionally, a data object can represent an entity such as a person, a place, an organization, a market instrument, a pronoun, or other noun. Data objects can further represent an event that happens at a point in time or for a duration. Each data object may be associated with a unique identifier that uniquely identifies the data object within the database of the system. In some embodiments, a data object may be associated with one or more properties (e.g., name(s), alias(es), occupation(s), or the like) to represent an entity such as a person.

As noted above, based at least on the first entity resolved from the one or more similar entities, metadata or context associated with a first entity (e.g., "Lebron James"), and a plurality of entities represented by a plurality of data objects stored in a database defined by an ontology, the system can further utilize one or more LLMs with reference to the ontology to determine whether the first entity matches any entity of the plurality of entities. For example, the system may utilize a LLM to determine, based on (i) properties associated with a data object (e.g., a "person" data object) stored in the database for representing an entity (e.g., "LBJ"), (ii) the first entity (e.g., "Lebron James"), and (iii) metadata or context (e.g., "basketball player") associated with the first entity, that the first entity matches the entity (e.g., the first entity and the entity represent the same entity). In response to determining that the first entity and the entity represent the same entity, the system may update the data object to represent both the entity and the first entity. For example, the system may add "Lebron James" to a property (e.g., a "name" property or a property indicating a name or an attribute) of the data object in addition to an existing property (e.g., "LBJ") of the data object. If, however, the first entity does not match any entity of the plurality of entities, the system may add into the database a new data object to represent the first entity (e.g., "Lebron James").

In some embodiments, the system may use the first entity to execute a similarity search (e.g., a string similarity search, cosine similarity search, approximate nearing neighbor (ANN) algorithms, k nearest neighbors (KNN) method, locality sensitive hashing (LSH), range queries, or any other similarity search algorithms) with reference to the ontology to determine that the plurality of entities represented by the plurality of data objects are more similar to the first entity than remaining entities represented by remaining data objects stored in the database, thereby narrowing scopes of entity matching. For example, based on a string similarity search, the system may filter n most similar entities in light of the first entity to be the plurality of entities represented by the plurality of data objects. In some examples, n may be adjustable to be 3, 5, 10, 15, or any other positive integers. Advantageously, by filtering the n most similar entities for entity matching, the system may match entities and/or enrich database more efficiently.

### Example Large Language Model Functionality

The system may employ one or more LLMs to provide various services. As noted above, the system may utilize one or more LLMs to chunk text according to semantic relatedness, extract and/or resolve entities mentioned in unstructured text data. The system may further utilize the one or more LLMs to identify metadata or context associated with entities mentioned in the unstructured text data and/or determine whether a resolved entity matches any existing entities represented by data objects stored in a database. In various implementations, the LLMs utilized by the system may be locally hosted, cloud managed, accessed via one or more Application Programming Interfaces ("APIs"), and/or any combination of the foregoing and/or the like. Data that may be processed and/or extracted using the LLMs may include any type of electronic data, such as audio transcript, spoken words, text, files, documents, books, manuals, emails, images, audio, video, databases, web pages, time series data, metadata, and/or any combination of the foregoing and/or the like.

Additionally, the system may provide the flexibility of easily swapping between various language models employed by the system to provide various services. For example, the system may swap the LLM (e.g., switching between GPT-3.5 to GPT-4o, switching between other newer or more advanced models) for extracting or resolving entities. Such model swapping flexibility provided by the system may be beneficial in various aspects, such as experimentation and adaptation to different models based on specific use cases or requirements, providing versatility and scalability associated with services rendered by the system.

In some implementations, the system can generate a graph that includes one or more similar entities, and utilize one or more LLMs to analyze the graph to resolve entities and/or determine whether to add or update a data object to represent a resolved entity. For example, in response to determining that a first entity to which first one or more similar entities correspond does not match any entity of a plurality of entities represented by a plurality of data objects stored in a database defined by an ontology, the system may generate a graph including at least a first node representing a first similar entity of one or more similar entities, a second node representing a second similar entity of the one or more similar entities, and a first edge connecting the first node and the second node. The first edge may indicate that the first similar entity and the second similar entity share a similarity (e.g., the first similar entity and the second similar entity are associated with the same phone number or email address). The system may utilize the one or more LLM to determine, based at least in part on the graph and metadata or context associated with the one or more similar entities, whether the first one or more similar entities match any entity of the plurality of entities. If there is a match, the system can further merge the first one or more similar entities into a known entity represented by a data object (e.g., the data object further represents the first one or more similar entities besides representing the known entity) stored in the database defined by the ontology. If there is still no match, the system can add the first one or more similar entities as a new entity (e.g., adding a new data object in the database to represent the first one or more similar entities).

In other implementations, the system can incorporate and/or communicate with one or more LLMs to perform various functions, such as executing similarity search on data with reference to an ontology. The communication between the system and the one or more LLMs may include, for example, a context associated with an aspect or analysis being performed by the system, a user-generated prompt, an engineered prompt that includes instructions to the one or more LLMs, prompt and response examples, example or actual data, and/or the like. For example, the system may employ an LLM, via providing a prompt (e.g., a prompt that includes text data) to, and receiving an output (e.g., entities extracted from the text data) from, the LLM. The output from the LLM may be parsed and/or a format of the output may be updated to be usable for various aspects of the system. In some embodiments, prompts transmitted by the system to the one or more LLMs may be compatible with a JavaScript Object Notation ("JSON") format.

### Further Example Information Related to Various Implementations

To facilitate an understanding of the systems and methods discussed herein, several terms are described below and herein. These terms, as well as other terms used herein, should be construed to include the provided descriptions, the ordinary and customary meanings of the terms, and/or any other implied meaning for the respective terms, wherein such construction is consistent with context of the term. Thus, the descriptions below and herein do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. An LLM may comprise a NN trained using self-supervised learning. An LLM may be of any type, including a Question Answer ("QA") LLM that may be optimized for generating answers from a context, a multimodal LLM/model, and/or the like. An LLM (and/or other models of the present disclosure), may include, for example, attention-based and/or transformer architecture or functionality. LLMs can be useful for natural language processing, including receiving natural language prompts and providing natural language responses based on the text on which the model is trained. LLMs may not be data security- or data permissions-aware, however, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

A Prompt (or "Natural Language Prompt" or "Model Input") can be, for example, a term, phrase, question, and/or statement written in a human language (e.g., English, Chinese, Spanish, and/or the like), and/or other text string, that may serve as a starting point for a language model and/or other language processing. A prompt may include only a user input or may be generated based on a user input, such as by a prompt generation module (e.g., of a document search system) that supplements a user input with instructions, examples, and/or information that may improve the effectiveness (e.g., accuracy and/or relevance) of an output from the language model. A prompt may be provided to an LLM which the LLM can use to generate a response (or "model output").

A User Operation (or "User Input") can be any operations performed by one or more users to user interface(s) and/or other user input devices associated with a system (e.g., the data extraction system). User operation can include a request for task(s) to be performed, such as by using a machine learning model and/or an LLM, in whole or in part. User operation can include a request for data, such as data accessed and/or processed by one or more services. User operation can include one or more queries, one or more questions, one or more requests, or the like. User operation may include one or more natural language instructions for some data analysis (e.g., prediction, estimation, classification, or the like) to be performed. User operations can include, for example, select, drag, move, group, or the like, one or more interactive graphical representations for updating an ontology.

An Ontology can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

A Data Object (or "Object" or "Data Object Instance") is a data container for information representing a specific thing in the world that has a number of definable properties. For example, a data object can represent a machine learning model. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A Data Object Type (or "Object Type") is a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

An Entity is or can refer to a specific person, institution, organization, place, market instrument, event, date, or other noun. Entities can be found in text data such as unstructured text data, documents, emails, articles, news reports, written papers, any natural language texts, or the like. Entities can also be found and extracted from audio transcripts that can be obtained by transcribing human speech. An entity can be represented by a data object of a data object type, where the data object is stored in a database associated with an ontology that defines the data object type

A Data Store is any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A Database is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Example System and Related Computing Environment

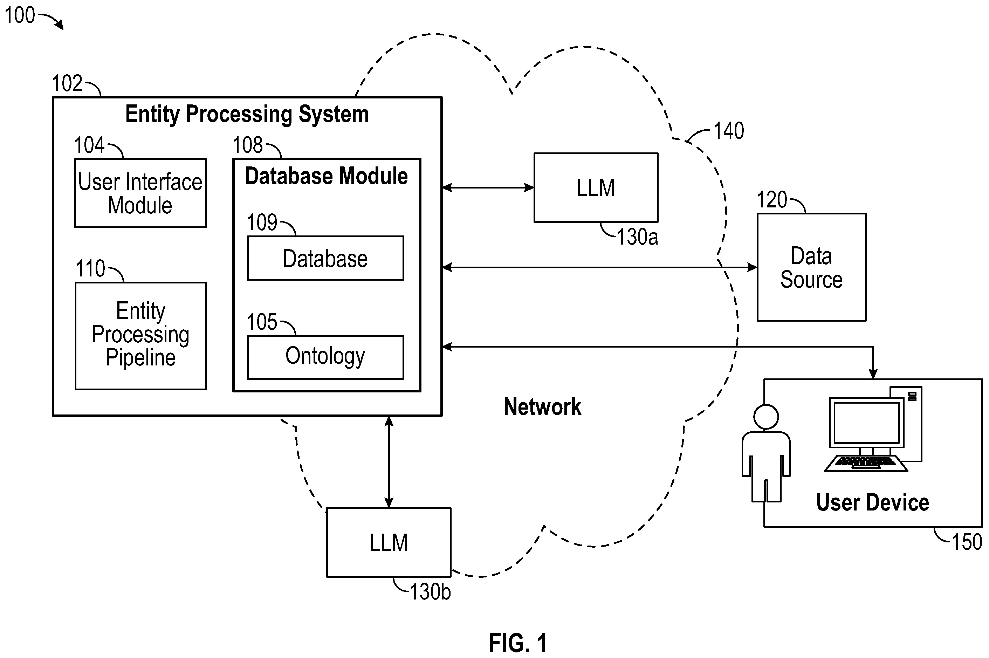

FIG. 1 illustrates an example computing environment 100 including an example entity processing system 102 in communication with various devices to utilize an entity processing pipeline 110 (e.g., an LLM-based entity processing pipeline) for extracting and resolving entities mentioned in text data (e.g., unstructured text data such as audio transcripts) and enriching a database, according to various implementations of the present disclosure. The example computing environment 100 includes the entity processing system 102, one or more LLMs (e.g., LLM 130a and/or LLM 130b), a network 140, a data source 120, and a user device 150 (and/or user computing device). In the example of FIG. 1, the entity processing system 102 comprises various modules, including a user interface module 104, an entity processing pipeline 110, a database module 108 that includes an ontology 105 and database 109. In other implementations, the entity processing system 102 may include fewer or additional components.

In the example of FIG. 1, the various devices are in communication via a network 140, which may include any combination of networks, such as one or more local area network (LAN), personal area network (PAN), wide area network (WAN), Global System for Mobile Communications (GSM) network, a Code Division Multiple Access (CDMA) network, a Long Term Evolution (LTE) network, the Internet, and/or any other communication network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. In various implementations, modules of the illustrated components, such as the user interface module 104, the entity processing pipeline 110, and the database module 108 of the entity processing system 102, may communicate via an internal bus and/or via the network 140.

The user interface module 104 is configured to generate user interface data that may be rendered on a user device 150, such as to receive an initial user operation/input, as well as later user operation/input that may be used to initiate further data processing. In various implementations, the functionality discussed with reference to the user interface module 104, and/or any other user interface functionality discussed herein, may be performed by a device or service outside of the entity processing system 102 and/or the user interface module 104 may be outside the entity processing system 102. In various examples, the user device 150 may perform various operations through the user interface module 104, such as submitting a user query about an entity (e.g., "When and where will Taylor Swift hold her next concert?"), and the entity processing system 102 is expected to return a natural language output responsive to the natural language query from the user device 150.

The entity processing pipeline 110 is configured to utilize one or more large language models ("LLM") (e.g., the LLM 130a and/or the LLM 130b) for extracting entities and associated metadata or context from unstructured text (e.g., audio transcripts), thereby automatically extracting and resolving entities mentioned accurately. The entity processing pipeline 110 can further streamline the process of enriching the database 109 defined by the ontology 105 by facilitating automatic adding and/or updating data objects to represent entities mentioned across various data sources (e.g., the data source 120), achieving accurate and comprehensive linking of entities to their respective metadata, context, and/or sources.

For example, the entity processing pipeline 110 may receive text data (e.g., unstructured data) from the data source 120. The text data can be at least a portion of an audio transcript (and/or other text data), lack a predefined format or structure, and/or may contain errors, misspellings, and variations (e.g., nicknames, aliases, pronouns, or the like) associated with entities mentioned in the text data. The entity processing pipeline 110 may generate a first prompt for a LLM (e.g., the LLM 130a or the LLM 130b) and transmit the first prompt to the LLM, where the first prompt may include at least the text data. In response to the first prompt, the entity processing pipeline 110 may receive a first output from the LLM. The first output may include one or more identification numbers that identify one or more semantically related text portions of the text data. Each of the one or more semantically related text portions may correspond to a single topic discussed in the audio transcript. Based on the first output, the entity processing pipeline 110 may generate and transmit a second prompt to the LLM. The second prompt may include at least a first part of a first semantically related text portion of the one or more semantically related text portions, and first one or more suggested entities associated with the first part of the first semantically related text portion. In response to the second prompt, the entity processing pipeline 110 may receive a second output from the LLM. The second output may include at least first one or more entities extracted by the LLM from the first part of the first semantically related text portion, and first metadata or context associated with the first one or more entities.

Based on the first one or more entities, the entity processing pipeline 110 may further execute a similarity search (e.g., using string similarity) to identify first one or more similar entities from the first one or more entities extracted by the LLM. The entity processing pipeline 110 may generate and transmit a third prompt to the LLM, where the third prompt includes at least the first one or more similar entities. In response to the third prompt, the entity processing pipeline 110 may receive a third output from the LLM. The third output may include at least a first entity to which the first one or more similar entities correspond or are resolved. The entity processing pipeline 110 may then utilize the LLM to determine, based at least on the first entity, the first metadata or context, and a plurality of entities represented by a plurality of data objects stored in the database 109 defined by the ontology 105, whether the first entity matches any entity of the plurality of entities. In response to determining that the first entity matches an entity of the plurality of entities represented by a data object of the plurality of data objects, the entity processing pipeline 110 may update the data object stored in the database 109 to represent at least the entity and the first entity. In response to determining that the first entity does not match any entity of the plurality of entities, the entity processing pipeline 110 may add into the database 109 another data object to represent the first entity extracted and resolved from the text data.

The database module 108 may be any type of data store and can store any data objects defined by the ontology 105. The ontology 105 may define data object and/or data object types and associated properties, and relationships among data objects, properties, and/or the like. The database module 108 is configured to store data/information that may be utilized by the entity processing pipeline **110** and/or accessed or manipulated by the user device 150, as described herein. Data that may be stored in the database module 108 may include any type of electronic data, such as text, files, documents, books, manuals, emails, images, audio, video, databases, metadata, positional data (e.g., geo-coordinates), sensor data, web pages, time series data, and/or any combination of the foregoing and/or the like. The database module 108 may optionally obtain and store at least a portion of text data from the data source 120. The database module may optionally store text data from the data source 120, and/or entities extracted or resolved by the entity processing pipeline 110.

Specifically, the database module 108 may store the ontology 105 and the database 109. The ontology 105 may constitute a way to represent things in the world. The ontology 105 may be used by an organization to model a view on what objects or entities exist in the world, what their properties are, and how they are related to each other. The ontology 105 may be user-defined, computer-defined, or some combination of the two. The ontology 105 may include hierarchical relationships among data objects and/or data object types. The database 109 may store data objects that are defined by the ontology 105, which may be created based on entities extracted and/or resolved by the entity processing pipeline 110 from the data source 120.

The data source 120 is configured to store and/or provide at least text data (e.g., unstructured text data such as audio transcripts) that may be queried by the user device 150 and/or various aspects of the entity processing system 102, where the stored text data may be obtained by the entity processing system 102. The data source 120 may be a third-party or data source external to the entity processing system 102. Additionally and/or optionally, the data source 120 may be internal to the entity processing system 102. Data that may be stored in the data source 120 may include any type of electronic data, such as text, files, documents, books, manuals, emails, images, audio, video, databases, metadata, positional data (e.g., geo-coordinates), sensor data, web pages, time series data, and/or any combination of the foregoing and/or the like

The entity processing system 102 may include and/or have access to one or more large language models or other language models (e.g., LLM 130a and LLM 130b), and the LLM may be fine-tuned or trained on appropriate training data. After receiving text data from the data source 120, the entity processing system 102 may generate and provide prompt(s) to a LLM 130a and/or 130b, which may include one or more large language models trained to fulfill a modeling objective, such as extracting entities and/or identifying relationships between entities mentioned in the text data.

As shown in FIG. 1, the entity processing system 102 may be capable of interfacing with multiple LLMs. This can allow for experimentation, hot-swapping and/or adaptation to different models based on specific use cases or requirements, providing versatility and scalability to the system. In various implementations, the entity processing system 102 may interface with a second LLM 130b (or the same first LLM 130a) in order to, for example, coalesce similar entities to the same entity based on entities extracted by the first LLM 130a. Although FIG. 1 illustrates that the LLM 130a and the LLM 130b are external to the entity processing system 102, in various implementations the LLM 130a and/or the LLM 130b can be internal to the entity processing system 102. It should be noted that the entity processing pipeline 110 may employ one of the LLM 130a and the LLM 130b for extracting and/or resolving entities, according to various implementations of the present disclosure.

In the example of FIG. 1, the entity processing system 102 can accurately extract and resolve entities mentioned in unstructured data received from the data source 120, and automatically update the database 109 as new mentions of entities are detected with full attribution to link when and/or where each entity was mentioned. Advantageously, the entity processing system 102 can accomplish accurate, automatic, and efficient entity identification, extraction, and/or resolution with reduced or without human interventions.

### Example System and Related Modules

In various implementations, techniques described herein, including with relation to data objects, unstructured text data, the ontology, and/or the like, may be limited to public documents or data to ensure that no private information is inappropriately added to the ontology. This may involve, for example, an initial check or filter of the documents or data being processed to ensure that they are not private documents or data. Additionally, in various implementations, the entities extracted or identified can be checked against a list of restricted entity types (e.g., a list of private or personal entity types such as health information or detailed banking information). Thus, for example, if the extracted or identified entities match against a restricted entity or a restricted entity type, the method or system can responsively omit adding the extracted or identified entities to the ontology to facilitate the protection of private information. Accordingly, in various implementations, the entity processing system 102 can include various privacy preserving functionality, such as filtering, anonymizing, obfuscation, aggregating, and/or the like, in combination with various other aspects and functionality of the entity processing system 102.

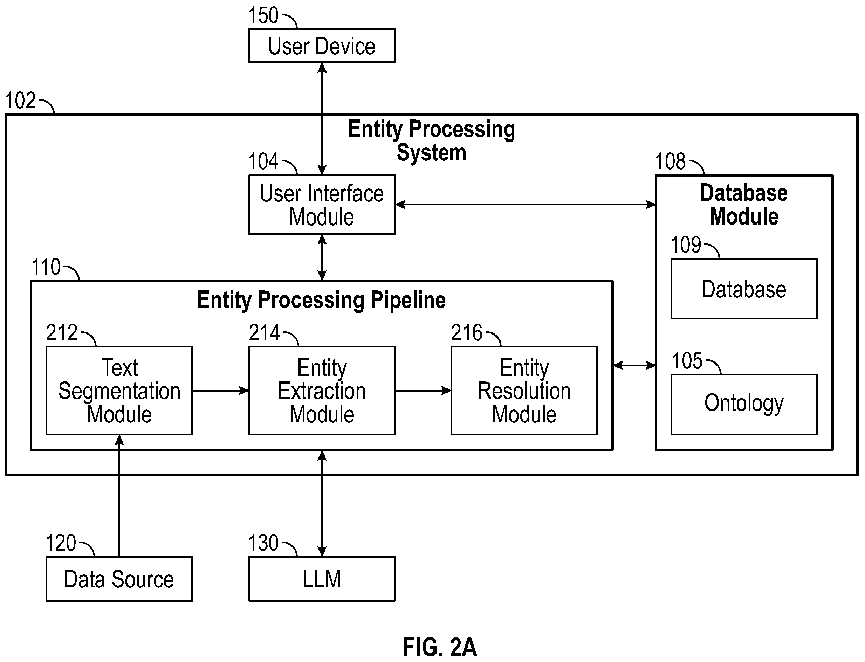

FIG. 2A depicts example connections between various modules of the entity processing system 102 of FIG. 1, including the user interface module 104, the database module 108 that includes the ontology 105 and the database 109, and the entity processing pipeline 110 that includes a text segmentation module 212, an entity extraction module 214, and an entity resolution module 216. In other implementations, the entity processing system 102 may include fewer or additional connections. The indicated connections and/or data flows of FIG. 2A are exemplary of only certain processes performed by the entity processing system 102 and is not meant to include all possible blocks and participants. In various implementations, at least some of the modules (e.g., the entity extraction module 214 and the entity resolution module 216) in the entity processing system 102 can be combined or integrated and/or at least some of the modules (e.g., the user interface module 104) can be omitted. Although one LLM (a LLM 130) is illustrated in FIG. 2A, it should be noted that the entity processing system 102 can employ more than one LLM to perform data analysis (e.g., extract entities, resolve entities, or the like) described herein.

In various implementations, the text segmentation module 212 may utilize one or more LLMs (e.g., the LLM 130, the LLM 130a, the LLM 130b) to process text data to identify or segment semantically related text portions of the text data for further analysis. The text segmentation module 212 may receive text data (e.g., unstructured data such as an audio transcript) from the data source 120. The text segmentation module 212 can divide or segment the audio transcript into multiple segments. For example, the text segmentation module 212 may segment the audio transcript into at least first text data and second text data, where the first text data and the second text data form at least a portion of the audio transcript and the second text data immediately follows the first text data in the audio transcript. The text segmentation module 212 may further employ the one or more LLMs to semantically chunk the first text data and the second text data respectively.

For example, the text segmentation module 212 may generate and transmit a first prompt to the LLM 130, where the first prompt includes at least the first text data. In generating the first prompt, the text segmentation module 212 can additionally and/or optionally add a plurality of identification numbers into the first text data to identify a plurality of portions of the first text data. For example, the text segmentation module 212 can add or insert indexes such as [0], [1], [2], [3], [4], [5], ... [32], into the first text data to indicate beginning and/or end of various portions (e.g., sections, paragraphs, or speaker-corresponding portions) of the first text data. As a more specific example, index [0] can indicate beginning of a first paragraph of the first text data, index [1] can indicate beginning of a second paragraph of the first text data, and so forth. As will be described below, these indexes can advantageously allow the LLM 130 to more efficiently generate output identifying semantically related text portions of the first text data.

In response to the first prompt, the text segmentation module 212 may receive a first output from the LLM 130, where the first output includes at least one or more identification numbers that identify first one or more semantically related text portions of the first text data. For example, the first output may include index [0], index [5], and index [32] to indicate that text between index [0] and index [5] is associated with a first topic discussed in the audio transcript, and text between index [5] and index [32] is associated with a second topic discussed in the audio transcript. Similarly, the LLM 130 may output indexes (e.g., index [35], index [42], index [45], or the like) to identify second one or more semantically related text portions of the second text data. By outputting the indexes that identify one or more semantically related text portions rather than the one or more semantically related text portions themselves, the size of the first output can be reduced, making the LLM 130 more efficient or cost-effective.

In some embodiments, the text segmentation module 212 may further utilize one or more LLMs to merge text portions from the first text data and the second text data that are semantically related with each other to form a single semantically related text portion. For example, as noted above, outputs from the LLM 130 may identify first one or more semantically related text portions of the first text data and second one or more semantically related text portions of the second text data, where the second text data immediately follows the first text data in the audio transcript. The text segmentation module 212 may generate and transmit a prompt to the LLM 130 that includes at least a last semantically related text portion (e.g., a text portion identified by and after the index [32]) of the first one or more semantically related text portions and a first semantically related text portion (e.g., a text portion identified by and before the index [35]) of the second one or more semantically related text portions. In response to the prompt, the LLM 130 may generate an output indicating that the last semantically related text portion of the first one or more semantically related text portions and the first semantically related text portion of the second one or more semantically related text portions are semantically related with each other (e.g., associated with a single topic discussed in the audio transcript). Based on the output, the text segmentation module 212 may merge the last semantically related text portion of the first one or more semantically related text portions and the first semantically related text portion of the second one or more semantically related text portions to form a single semantically related text portion. The text segmentation module 212 may further employ the LLM 130 to chunk the single semantically related text portion into one or more parts for further analysis (e.g., entity extraction and resolution associated with the one or more parts). Advantageously, the text segmentation module 212 can fully and/or more flexibly merge segments of the audio transcript that correspond to the same topic for achieving more accurate entity extraction and resolution.

In some embodiments, the text segmentation module 212 can further segment a semantically related text portion into various parts, and utilize one or more LLMs to extract entities based on the various parts. For example, for each of the first one or more semantically related text portions of the first text data, the text segmentation module 212 can segment a semantically related text portion into one or more parts. Each of the one or more parts may include several sentences, hundreds of tokens, or the like, where a size of each part may be determined based on a context window associated with the LLM 130. For each part, the text segmentation module 212 may generate a prompt for the LLM 130 to extract entities mentioned in the part. Advantageously, tasking the LLM 130 to extract entities from a part that does not exceed the context window associated with the LLM 130 can avoid "attention" issues of LLM, which tend to occur when the LLM 130 is tasked to extract entities from text data (e.g., a semantically related text portion, a long paragraph in an audio transcript, or the like) longer or larger than the context window. As a result, the LLM 130 may be less likely to miss entity, and may be able to fully capture or extract any entities mentioned in the audio transcript.

In various implementations, the entity extraction module 214 may generate one or more suggested entities for the LLM 130 to perform entity extraction for each of the one or more parts segmented by the text segmentation module 212. For example, the entity extraction module 214 may utilize a detection model (e.g., a SpaCy model) to detect one or more suggested entities associated with a first part of a first semantically related text portion of the first text data. The one or more suggested entities may include pronouns, names, aliases, nicknames, or the like mentioned in the first part of the first semantically related text portion. The detection model may also generate one or more attributes associated with the one or more suggested entities. The one or more attributes may specify that the one or more suggested entities correspond to person(s) and/or organization(s), or specify other attributes (e.g., occupations, identities, or the like) associated with the one or more suggested entities. The entity extraction module 214 may generate a second prompt for the LLM 130 that includes at least the first part of the first semantically related text portion of the first text data and the one or more suggested entities associated with the first part of the first semantically related text portion for the LLM to extract entities.

Additionally and/or optionally, the second prompt may indicate to the LLM 130 that the one or more suggested entities and/or the one or more attribute associated with the one or more suggested entities are prone to error. For example, the one or more suggested entities may include "Levron James," "Lebron James," "James," "LBJ," and/or other aliases and/or misspellings associated with an entity, and the second prompt may indicate to the LLM 130 that some of the one or more suggested entities may not correctly identify an entity. As another example, the second prompt may indicate to the LLM 130 that an attribute associated with a suggested entity may be erroneous (e.g., a suggested entity indicated as an organization by the attribute may in fact represent a person).

As noted above, the entity extraction module 214 may utilize one or more LLMs (e.g., the LLM 130) to extract entities mentioned in an audio transcript. For example, in response to the second prompt, the LLM 130 may generate a second output that includes at least one or more entities extracted from a part of a semantically related text portion and metadata or context associated with the one or more entities. The second output may include at least an entity (e.g., "Lebron James") extracted by the LLM 130 and metadata or context (e.g., basketball player rather than an electrical engineer) associated with the entity extracted by the LLM 130 from the audio transcript. Advantageously, by utilizing LLM 130 to identify metadata or context associated with extracted entities for further use, the entity processing pipeline 110 may be able to more accurately extract or resolve entities from unstructured data such as the audio transcript.

Based on entities extracted by one or more LLMs, the entity resolution module 216 may further utilize data processing techniques and/or the one or more LLMs to resolve entities. In some embodiments, using at least one or more entities extracted by the LLM 130, the entity resolution module 216 may execute a similarity search to identify one or more similar entities from the one or more entities extracted by the LLM 130. For example, the one or more entities extracted by the LLM 130 may include "Lebron James," "Jonas Sanders," "Jones Sander," and "James." The entity resolution module 216 may utilize string similarity search techniques (e.g., Jaccard, Jaro-Winkler, Levenshtein, or the like) to group the one or more entities into the one or more similar entities (e.g., grouping "Lebron James" and "James" into first one or more similar entities, and grouping "Jonas Sanders" and "Jones Sander" into second one or more similar entities).

The entity resolution module 216 can further generate a third prompt including at least the first one or more similar entities for the LLM to perform entity resolution. Rather than generating a prompt that includes all the entities extracted by the LLM 130, grouping the one or more entities into one or more similar entities and prompting the LLM 130 to resolve the one or more similar entities can advantageously allow the LLM to more accurately resolve entities (e.g., by avoiding letting the LLM 130 resolve too many entities at the same time that may also lead to "attention" issues associated with the LLM 130).

In response to the third prompt, the entity resolution module 216 can receive a third output from the LLM 130 that includes at least a first entity to which the one or more similar entities correspond or resolve. For example, in response to the third prompt that includes "Lebron James," "Levron James," and "James," the third output from the LLM may include "Lebron James" to which "Lebron James," "Levron James," and "James" correspond or resolve. Additionally and/or optionally, the one or more entities, the one or more similar entities, and/or the first entity can each be associated with an identification number (ID) for further linking and/or other managing purposes.

In some embodiments, the entity resolution module 216 may employ the database module 108 that uses the ontology 105 and the database 109 to store, represent, and/or organize data utilized by the entity processing system 102. The entity resolution module 216 may manage the ontology 105 to update data objects (e.g., updating a data object to represent various entities that correspond to the same entity) and/or add data objects (e.g., adding a data object to represent an entity mentioned in a newly released audio transcript) into the database 109 associated with the ontology 105 to enrich the ontology 105, the database module 108, and/or knowledge bases of an organization. As such, data utilized by the entity processing system 102 may be organized and linked (e.g., through use of identification numbers or other types of identifiers) to relevant context for providing a comprehensive knowledge base for reference and/or analysis.

As noted above, based at least on the first entity resolved from the one or more similar entities, metadata or context associated with a first entity (e.g., "Lebron James"), and a plurality of entities represented by a plurality of data objects stored in the database 109 defined by the ontology 105, the entity resolution module 216 can further utilize one or more LLMs with reference to the ontology 105 to determine whether the first entity matches any entity of the plurality of entities. For example, the entity resolution module 216 may utilize the LLM 130 to determine, based on (i) properties associated with a data object (e.g., a "person" data object) stored in the database for representing an entity (e.g., "LBJ"), (ii) the first entity (e.g., "Lebron James"), and (iii) metadata or context (e.g., "basketball player") associated with the first entity, that the first entity matches the entity (e.g., the first entity and the entity represent the same entity). In response to determining that the first entity and the entity represent the same entity, the entity resolution module 216 may update the data object to represent both the entity and the first entity. For example, the entity resolution module 216 may add "Lebron James" to a property (e.g., a "name" property or a property indicating a name or an attribute) of the data object in addition to an existing property (e.g., "LBJ") of the data object. If, however, the first entity does not match any entity of the plurality of entities, the entity resolution module 216 may add into the database 109 a new data object to represent the first entity (e.g., "Lebron James").

In some embodiments, the entity resolution module 216 may use the first entity to execute a similarity search (e.g., a string similarity search, cosine similarity search, approximate nearing neighbor (ANN) algorithms, k nearest neighbors (KNN) method, locality sensitive hashing (LSH), range queries, or any other similarity search algorithms) with reference to the ontology 105 to determine that the plurality of entities represented by the plurality of data objects are more similar to the first entity than remaining entities represented by remaining data objects stored in the database 109, thereby narrowing scopes of entity matching. For example, based on a string similarity search, the entity resolution module 216 may filter n most similar entities in light of the first entity to be the plurality of entities represented by the plurality of data objects. In some examples, n may be adjustable to be 3, 5, 10, 15, or any other positive integers. Advantageously, by filtering the n most similar entities for entity matching, the entity resolution module 216 may match entities and/or enrich database more efficiently.

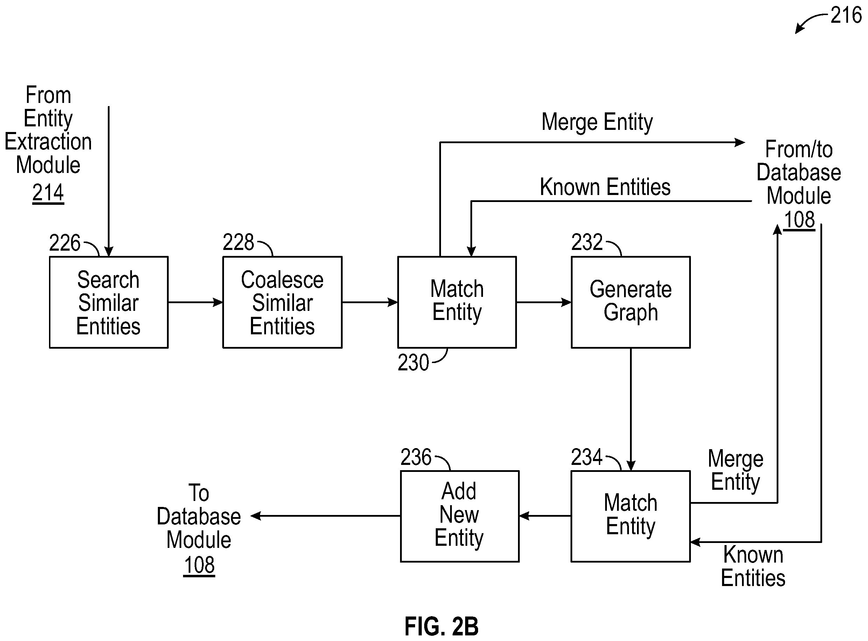

FIG. 2B depicts a block diagram of example processing stages 226, 228, 230, 232, 234, and 236 of the entity resolution module 216, according to various implementations of the present disclosure. The indicated connections and/or data flows of FIG. 2B are exemplary of only certain processes performed by the entity resolution module 216 and is not meant to include all possible blocks and participants.

At the processing stage 226, using at least one or more entities extracted by the LLM 130 and received from the entity extraction module 214, the entity resolution module 216 may execute a similarity search to identify one or more similar entities from the one or more entities. For example, the one or more entities received from the entity extraction module 214 may include "Lebron James," "Jonas Sanders," "Jones Sander," and "James." The entity resolution module 216 may utilize string similarity search techniques (e.g., Jaccard, Jaro-Winkler, Levenshtein, or the like) to search and/or group the one or more entities into the one or more similar entities (e.g., grouping "Lebron James" and "James" into first one or more similar entities, and grouping "Jonas Sanders" and "Jones Sander" into second one or more similar entities).

At the processing stage 228, the entity resolution module 216 can generate a third prompt including at least the first one or more similar entities for the LLM 130 to perform entity resolution (e.g., determining whether the first one or more similar entities can be coalesced to the same entity). In response to the third prompt, the entity resolution module 216 can receive a third output from the LLM 130 that includes at least a first entity to which the first one or more similar entities correspond or resolve. For example, in response to the third prompt that includes "Lebron James," "Levron James," and "James," the third output from the LLM may include "Lebron James" to which "Lebron James," "Levron James," and "James" correspond or resolve. Additionally and/or optionally, the one or more entities, the first one or more similar entities, and/or the first entity can each be associated with an identification number (ID) for further linking and/or other managing purposes.

At the processing stage 230, based at least on the first entity resolved from the first one or more similar entities, metadata or context associated with a first entity (e.g., "Lebron James"), and a plurality of entities represented by a plurality of data objects stored in the database 109 defined by the ontology 105, the entity resolution module 216 can further utilize one or more LLMs with reference to the ontology 105 to determine whether the first entity matches any entity of the plurality of entities (e.g., known entities). For example, the entity resolution module 216 may utilize the LLM 130 to determine, based on (i) properties associated with a data object (e.g., a "person" data object) stored in the database for representing an entity (e.g., "LBJ"), (ii) the first entity (e.g., "Lebron James"), and (iii) metadata or context (e.g., "basketball player") associated with the first entity, that the first entity matches the entity (e.g., the first entity and the entity represent the same entity).

In response to determining that the first entity and the entity represent the same entity, the entity resolution module 216 may update the data object stored in the database module 108 to represent both the entity and the first entity (e.g., merge the entity and the first entity). For example, the entity resolution module 216 may add "Lebron James" to a property (e.g., a "name" property or a property indicating a name or an attribute) of the data object in addition to an existing property (e.g., "LBJ") of the data object.

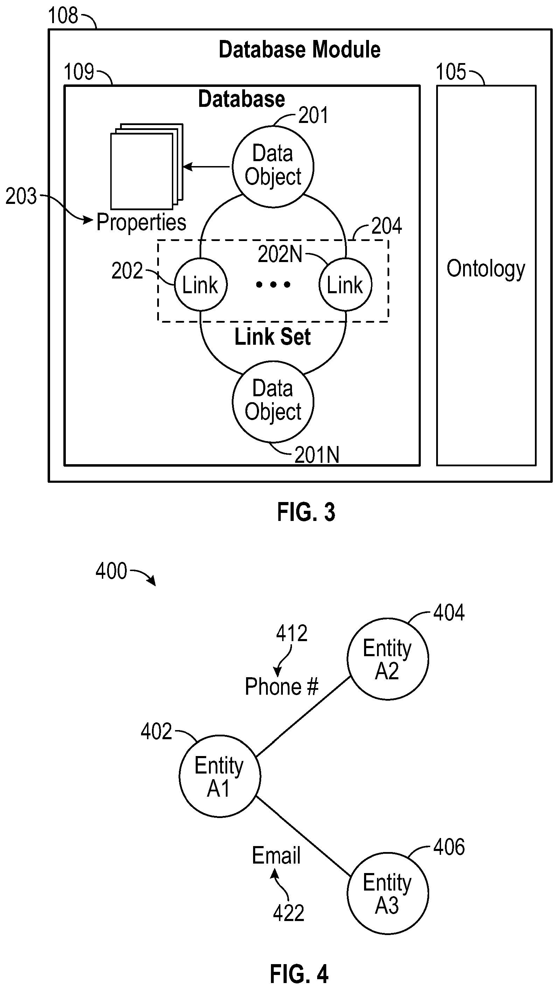

If, however, the first entity does not match any entity of the plurality of entities, the entity resolution module 216 may proceed to the processing stages 232, 234, and/or 236. At the processing stage 232, the entity resolution module 216 may generate a graph that will be analyzed by the LLM 130 to confirm or determine again if there is no match between the first one or more similar entities and the plurality of entities represented by the plurality of data objects stored in the database 109 defined by the ontology 105. For example, the graph may at least a first node representing a first similar entity of one or more similar entities, a second node representing a second similar entity of the one or more similar entities, and a first edge connecting the first node and the second node. The first edge may indicate that the first similar entity and the second similar entity share a similarity (e.g., the first similar entity and the second similar entity are associated with the same phone number or email address). Another example of the graph that can be generated by the entity resolution module 216 will be described below with reference to FIG. 4.

At the processing stage 234, the entity resolution module 216 may utilize the LLM 130 to determine, based at least in part on the graph and metadata or context associated with the first one or more similar entities, whether the first one or more similar entities match any entity of the plurality of entities (e.g., known entities). If there is a match, the entity resolution module 216 can further merge the first one or more similar entities into a known entity represented by a data object (e.g., the data object further represents the first one or more similar entities besides representing the known entity) stored in the database 109 defined by the ontology 105.

If there is still no match, the entity resolution module 216 can proceed to the processing stage 236. At the processing stage 236, the entity resolution module 216 can add the first one or more similar entities as a new entity (e.g., adding a new data object in the database 109 to represent the first one or more similar entities).

### Example Database and Data Models

FIG. 3 illustrates an object-centric conceptual data model in the database module 108 of the entity processing system 102 according to various implementations of the present disclosure. The database module 108 may store the ontology 105 and the database 109. The ontology 105, as noted above, may include stored information providing a data model for storage of data in the database 109. The ontology 105 may be defined by one or more data object types, which may each be associated with one or more property types. At the highest level of abstraction, data object 201 is a container for information representing things in the world. For example, the data object 201 can represent an entity such as a particular person, place, organization, date, market instrument, item, or other noun, where the entity may appear in text data such as a document, an e-mail message, a news report, a written paper, an article, or the like. Data object 201 can also represent an event that happens at a point in time or for a duration. Each data object 201 may be associated with a unique identifier that uniquely identifies the data object within the database 109 of the database module 108. In some embodiments, a data object may be associated with one or more properties (e.g., name(s), alias(es), occupation(s), or the like) to represent an entity such as a person.

In various implementations, different types of data objects may have different property types. For example, a "Person" data object might have an "Eye Color" property type and an "Event" data object might have a "Date" property type. Each property 203 as represented by data in the database module 108 may have a property type defined by the ontology 105 used by the database module 108. Objects may be instantiated in the database 109 in accordance with the corresponding object definition for the particular object in the ontology 105. For example, a specific monetary payment (e.g., an object of type "event") of US$30.00 (e.g., a property of type "currency") taking place on 3/27/2009 (e.g., a property of type "date") may be stored in the database 109 as an event object with associated currency and date properties as defined within the ontology 105. The data objects defined in the ontology 105 may support property multiplicity. In particular, the data object 201 may be allowed to have more than one property 203 of the same property type. For example, a "Person" data object might have multiple "Address" properties or multiple "Name" properties. Each link 202 represents a connection between two data objects 201. In one implementation, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of" relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just various examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document. Each data object 201 can have multiple links with another data object 201 to form a link set 204. For example, two "Person" data objects representing a husband and a wife could be linked through a "Spouse Of" relationship, a matching "Address" property, and one or more matching "Event" properties (e.g., a wedding). Each link 202 as represented by data in the database 109 may have a link type defined by the ontology 105 and/or used by the database 109.

For ease of understanding, in some implementations, data objects (e.g., the data object 201 and the data object 201N), links between data objects (e.g., the link 202 and link 202N) that may represent relationships between the data objects, and properties of data objects (e.g., the properties 203) can be visualized using one or more graphical user interfaces (GUI). For example, an example user interface may show a graphical representation of relationships between data objects that are represented as nodes in the graphical representation. The data objects may include, for example, person data objects, flight data objects, account data objects, computer data objects, and/or the like. The objects/nodes may have relationships and/or links with any of the other objects/nodes.

In some implementations, relationships between data objects may be stored as links, or in some implementations, as properties, where a relationship may be detected between the properties. In some cases, as stated above, the links may be directional. For example, a payment link may have a direction associated with the payment, where one person object is a receiver of a payment, and another person object is the payer of payment.

In addition to visually showing relationships between the data objects, a user interface may allow various other manipulations. For example, the objects within database module 108 may be searched using a search interface (e.g., text string matching of object properties), inspected (e.g., properties and associated data viewed), filtered (e.g., narrowing the universe of objects into sets and subsets by properties or relationships), and statistically aggregated (e.g., numerically summarized based on summarization criteria), among other operations and visualizations.

FIG. 4 illustrates an example graphical representation 400 (e.g., an example graph 400) of similar entities that can be generated by the entity processing system 102, according to various implementations of the present disclosure. In some implementations, the graph 400 can be generated at the processing stage 232 of FIG. 2B based on one or more similar entities identified (e.g., using string similarity search techniques) at the processing stage 226 of FIG. 2B. In other implementations, the graph 400 can be generated based on at least a portion of a plurality of entities (e.g., known entities) represented by a plurality of data objects stored in the database 109 defined by the ontology 105.

As shown in FIG. 4, the graph 400 includes a node 402, a node 404, a node 406, an edge 412, and an edge 422. In some implementations, the node 402 represents a first similar entity (e.g., Entity A1) of first one or more similar entities that are identified by the entity resolution module 216 at the processing stage 226. The node 404 represents a second similar entity (e.g., Entity A2) of first one or more similar entities that are identified by the entity resolution module 216 at the processing stage 226. The node 406 represents a third similar entity (e.g., Entity A3) of first one or more similar entities that are identified by the entity resolution module 216 at the processing stage 226.

As shown in FIG. 4, the first node 402 and the second node 404 are connected by the edge 412. Here, the edge 412 indicates that Entity A1 and Entity A2 share the same phone number. The first node 402 and the third node 406 are connected by the edge 422. Here, the edge 422 indicates that Entity A1 and Entity A3 share the same email address.

In some implementations, the entity resolution module 216 may utilize the LLM 130 to determine, based at least in part on the graph 400 and metadata or context (e.g., the phone number indicated by the edge 412 and the email address indicated by the edge 422) associated with the first one or more similar entities, whether the first one or more similar entities match any entity of the plurality of entities (e.g., known entities) as discussed with reference to the processing stages 234 and 236 of FIG. 2B.

### Example Functionality and Operations of the System

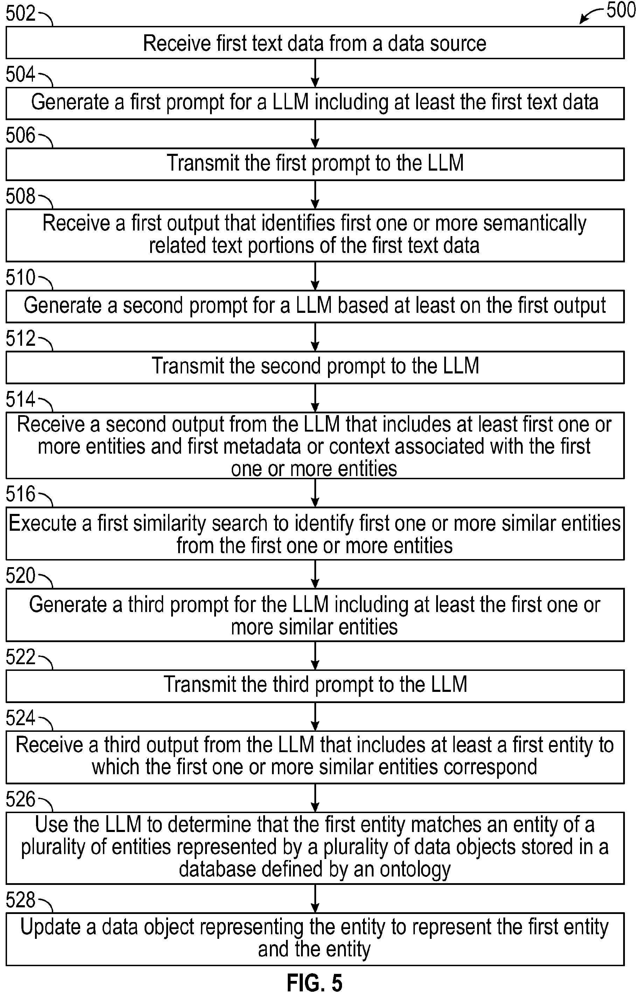

FIGS. 5, 6A, 6B, 7, and 8 show flowcharts illustrating example operations of the entity processing system 102 (and/or various other aspects of the example computing environment 100), according to various embodiments. The blocks of the flowcharts illustrate example implementations, and in various other implementations various blocks may be rearranged, optional, and/or omitted, and/or additional block may be added. In various embodiments, the example operations of the system illustrated in FIGS. 5, 6A, 6B, 7, and 8 may be implemented, for example, by the one or more aspects of the entity processing system 102 (e.g., the entity processing pipeline 110), various other aspects of the example computing environment 100, and/or the like.

FIG. 5 depicts a flowchart illustrating an example method 500 according to various embodiments. The method 500 may be implemented, for example, by the entity processing system 102 of FIGS. 1 and 2A for utilizing one or more LLMs (e.g., the LLM 130a and/or the LLM 130b) to extract and resolve entities from unstructured text data received from the data source 120. In various implementations, the method 500 may be performed in part or in full by the entity processing system 102. For example, the entity processing system 102 may perform blocks 502, 504, 506, 508, 510, 512, and 514 without performing blocks 516, 520, 522, 524, 526, or 528.

At block 502, the entity processing pipeline 110 (e.g., the text segmentation module 212) may receive first text data (e.g., unstructured data) from the data source 120. The data source 120 may store and/or include any type of electronic data, such as audio transcript, spoken words, text, files, documents, books, manuals, emails, images, audio, video, databases, web pages, time series data, metadata, and/or any combination of the foregoing and/or the like. The first text data can be generated by the data source 120 based on any type of electronic data mentioned above. The first text data can be at least a portion of an audio transcript (and/or other text data), lack a predefined format or structure, and/or may contain errors, misspellings, and variations (e.g., nicknames, aliases, pronouns, or the like) associated with entities mentioned in the text data.

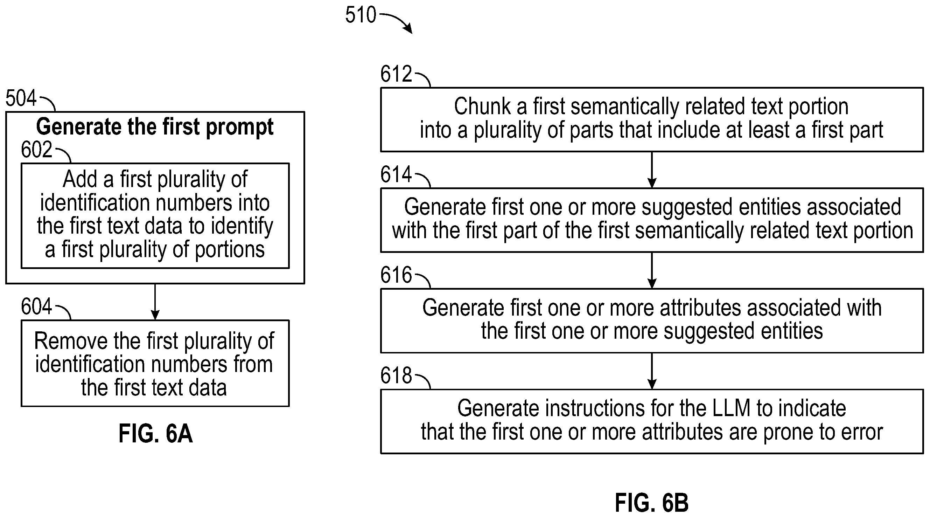

At block 504, the entity processing pipeline 110 may generate a first prompt for a LLM. For example, the text segmentation module 212 may generate the first prompt for the LLM 130, where the first prompt may include at least the first text data. More detailed example implementation of the block 504 for generating the first prompt will be further described below with reference to block 602 of FIG. 6A.

At block 506, the entity processing pipeline 110 may transmit the first prompt to the LLM. For example, the text segmentation module 212 may transmit the first prompt including at least the first text data to the LLM 130.

At block 508, the entity processing pipeline 110 may receive a first output that identifies first one or more semantically related text portions of the first text data. For example, the text segmentation module 212 may receive the first output including at least one or more identification numbers that identify first one or more semantically related text portions of the first text data. Each of the first one or more semantically related text portions may correspond to a single topic discussed in the audio transcript. For example, the first output may include index [0], index [5], and index [32] to indicate that text of the first text data between index [0] and index [5] is associated with a first topic discussed in the audio transcript, and text between index [5] and index [32] is associated with a second topic discussed in the audio transcript. By outputting the indexes that identify the first one or more semantically related text portions rather than the first one or more semantically related text portions themselves, the size of the first output can be reduced, making the LLM 130 more efficient or cost-effective

At block 510, the entity processing pipeline 110 may generate, based at least on the first output, a second prompt for a LLM. For example, the entity extraction module 214 may generate the second prompt to the LLM 130 based on the first output. The second prompt may include at least a first part (e.g., several sentences, hundreds of tokens, or the like) of a first semantically related text portion of the first one or more semantically related text portions, and first one or more suggested entities associated with the first part of the first semantically related text portion. More detailed example implementation of the block 510 for generating the second prompt will be further described below with reference to FIG. 6B.

At block 512, the entity processing pipeline 110 may transmit the second prompt to the LLM. For example, the entity extraction module 214 may transmit to the LLM 130 the second prompt including at least the first part of the first semantically related text portion of the first one or more semantically related text portions, and the first one or more suggested entities associated with the first part of the first semantically related text portion.

At block 514, the entity processing pipeline 110 may receive a second output from a LLM that includes at least first one or more entities and first metadata or context associated with the first one or more entities. For example, the entity extraction module 214 may receive the second output from the LLM 130. The second output may include at least first one or more entities extracted by the LLM 130 from the first part of the first semantically related text portion, and first metadata or context associated with the first one or more entities. More specifically, the second output may include at least a first entity (e.g., "Lebron James") extracted by the LLM 130 and first metadata or context (e.g., basketball player rather than an electrical engineer) associated with the first entity extracted by the LLM 130 from the audio transcript.

At block 516, the entity processing pipeline 110 may execute a first similarity search to identify first one or more similar entities from the first one or more entities. For example, the entity resolution module 216 may execute a similarity search (e.g., using string similarity) to identify first one or more similar entities from the first one or more entities extracted by the LLM 130. More specifically, the first one or more entities extracted by the LLM 130 may include "Lebron James," "Jonas Sanders," "Jones Sander," and "James." The entity resolution module 216 may utilize string similarity search techniques (e.g., Jaccard, Jaro-Winkler, Levenshtein, or the like) to group the first one or more entities into the first one or more similar entities (e.g., grouping "Lebron James" and "James" into first one or more similar entities, and grouping "Jonas Sanders" and "Jones Sander" into second one or more similar entities).

At block 520, the entity processing pipeline 110 may generate a third prompt for a LLM including at least the first one or more similar entities. For example, the entity resolution module 216 may generate the third prompt including at least the first one or more similar entities for the LLM 130 to perform entity resolution. Rather than generating a prompt that includes all the entities extracted by the LLM 130, grouping the first one or more entities into the first one or more similar entities and prompting the LLM 130 to resolve the first one or more similar entities can advantageously allow the LLM 130 to more accurately resolve entities (e.g., by avoiding letting the LLM 130 resolve too many entities at the same time that may also lead to "attention" issues associated with the LLM 130).

At block 522, the entity processing pipeline 110 may transmit the third prompt to the LLM. For example, the entity resolution module 216 may transmit the third prompt to the LLM 130.

At block 524, the entity processing pipeline 110 may receive a third output from the LLM that includes at least a first entity to which the first one or more similar entities correspond or coalesce. For example, the entity resolution module 216 may receive the third output from the LLM 130 that includes at least a first entity to which the first one or more similar entities correspond or resolve. More specifically, in response to the third prompt that includes "Lebron James," "Levron James," and "James," the third output from the LLM 130 may include "Lebron James" to which "Lebron James," "Levron James," and "James" correspond or coalesce. Additionally and/or optionally, the first one or more entities, the first one or more similar entities, and/or the first entity can each be associated with an identification number (ID) for further linking and/or other managing purposes associated with the database module 108.

At block 526, the entity processing pipeline 110 may use the LLM to determine that the first entity matches an entity of a plurality of entities represented by a plurality of data objects stored in the database 109 defined by the ontology 105. For example, based at least on the first entity resolved from the first one or more similar entities, first metadata or context associated with the first entity (e.g., "Lebron James"), and a plurality of entities represented by a plurality of data objects stored in the database 109 defined by the ontology 105, the entity resolution module 216 can further utilize the LLM 130 with reference to the ontology 105 to determine whether the first entity matches any entity of the plurality of entities. More specifically, the entity resolution module 216 may utilize the LLM 130 to determine, based on (i) properties associated with a data object (e.g., a "person" data object) stored in the database 109 for representing an entity (e.g., "LBJ"), (ii) the first entity (e.g., "Lebron James"), and (iii) first metadata or context (e.g., "basketball player") associated with the first entity, that the first entity matches the entity (e.g., the first entity and the entity represent the same entity).

At block 528, the entity processing pipeline 110 may update a data object representing the entity to represent the first entity and the entity. For example, in response to determining that the first entity and the entity represent the same entity, the entity resolution module 216 may update the data object to represent both the entity and the first entity. More specifically, the entity resolution module 216 may add "Lebron James" to a property (e.g., a "name" property or a property indicating a name or an attribute) of the data object in addition to an existing property (e.g., "LBJ") of the data object.

FIGS. 6A and 6B are flowcharts illustrating example routines for generating prompts to one or more LLMs for segmenting and extracting entities from unstructured text data, according to various implementations of the present disclosure. In various implementations, the example implementation including blocks (e.g., blocks 602 and 604, or blocks 612, 614, 616, and 618) that may be performed in part or in full by the entity processing pipeline 110. In various implementations, the blocks may be performed concurrently and/or sequentially.

FIG. 6A includes a flowchart illustrating an example implementation of the block 504 for generating the first prompt, according to various embodiments of the present disclosure. At block 602, the entity processing pipeline 110 may add a first plurality of identification numbers into the first text data to identify a first plurality of portions. For example, in generating the first prompt, the text segmentation module 212 can add a first plurality of identification numbers into the first text data to identify a first plurality of portions of the first text data. For example, the text segmentation module 212 can add or insert indexes such as [0], [1], [2], [3], [4], [5], ... [32], into the first text data to indicate beginning and/or end of various portions (e.g., sections, paragraphs, or speaker-corresponding portions) of the first text data. As a more specific example, index [0] can indicate beginning of a first paragraph of the first text data, index [1] can indicate beginning of a second paragraph of the first text data, and so forth. These indexes can advantageously allow the LLM 130 to more efficiently generate output identifying semantically related text portions of the first text data.

As noted above, in response to the first prompt, the text segmentation module 212 may receive a first output (e.g., the first output received at block 508) from the LLM 130, where the first output includes at least one or more identification numbers that identify first one or more semantically related text portions of the first text data. For example, the first output may include index [0], index [5], and index [32] to indicate that text between index [0] and index [5] is associated with a first topic discussed in the audio transcript, and text between index [5] and index [32] is associated with a second topic discussed in the audio transcript. Similarly, the LLM may output indexes (e.g., index [35], index [42], index [45], or the like) to identify second one or more semantically related text portions of the second text data. By outputting the indexes that identify one or more semantically related text portions rather than the one or more semantically related text portions themselves, the size of the first output can be reduced, making the LLM 130 more efficient or cost-effective.

At block 604, the entity processing pipeline 110 may remove the first plurality of identification numbers from the first text data. For example, after entities mentioned in the first text data are extracted by the LLM 130, the text segmentation module 212 may remove the first plurality of identification numbers from the first text data so as to advantageously reduce the storage needed for storing the first text data in the database module 108.

FIG. 6B includes a flowchart illustrating an example implementation of the block 510 for generating the second prompt, according to various embodiments of the present disclosure. At block 612, the entity processing pipeline 110 may chunk a first semantically related text portion into a plurality of parts that include at least a first part. For example, the text segmentation module 212 can segment the first semantically related text portion into the plurality of parts that include at least the first part. Each of the plurality of parts may include several sentences, hundreds of tokens, or the like, where a size of each part may be determined based on a context window associated with the LLM 130. For each part, the entity extraction module 214 may generate a prompt for the LLM 130 to extract entities mentioned in the part. Advantageously, tasking the LLM 130 to extract entities from a part that does not exceed the context window associated with the LLM 130 can avoid "attention" issues of LLM, which tend to occur when the LLM 130 is tasked to extract entities from text data (e.g., a semantically related text portion, a long paragraph in an audio transcript, or the like) longer or larger than the context window. As a result, the LLM 130 may be less likely to miss entity, and may be able to fully capture or extract any entities mentioned in the audio transcript.

At block 614, the entity processing pipeline 110 may generate first one or more suggested entities associated with the first part of the first semantically related text portion. For example, the entity extraction module 214 may utilize a detection model to detect first one or more suggested entities associated with the first part of the first semantically related text portion of the first text data. The first one or more suggested entities may include pronouns, names, aliases, nicknames, or the like mentioned in the first part of the first semantically related text portion.

At block 616, the entity processing pipeline 110 may generate first one or more attributes associated with the first one or more suggested entities. For example, the entity extraction module 214 may utilize a detection model to generate first one or more attributes associated with the first one or more suggested entities. The first one or more attributes may specify that the first one or more suggested entities correspond to person(s) and/or organization(s), or specify other attributes (e.g., occupations, identities, or the like) associated with the first one or more suggested entities. The entity extraction module 214 may generate the second prompt for the LLM 130 that includes at least the first part of the first semantically related text portion of the first text data and the first one or more suggested entities associated with the first part of the first semantically related text portion for the LLM 130 to extract entities.

At block 618, the entity processing pipeline 110 may generate instructions for the LLM to indicate that the first one or more attributes are prone to error. For example, the entity extraction module 214 may generate the second prompt including instructions indicating to the LLM 130 that the first one or more suggested entities and/or the first one or more attribute associated with the first one or more suggested entities are prone to error. For example, the first one or more suggested entities may include "Levron James," "Lebron James," "James," "LBJ," and/or other aliases and/or misspellings associated with an entity, and the second prompt may indicate to the LLM 130 that some of the first one or more suggested entities may not correctly identify an entity. As another example, the second prompt may indicate to the LLM 130 that an attribute associated with a suggested entity may be erroneous (e.g., a suggested entity indicated as an organization by the attribute may in fact represent a person).

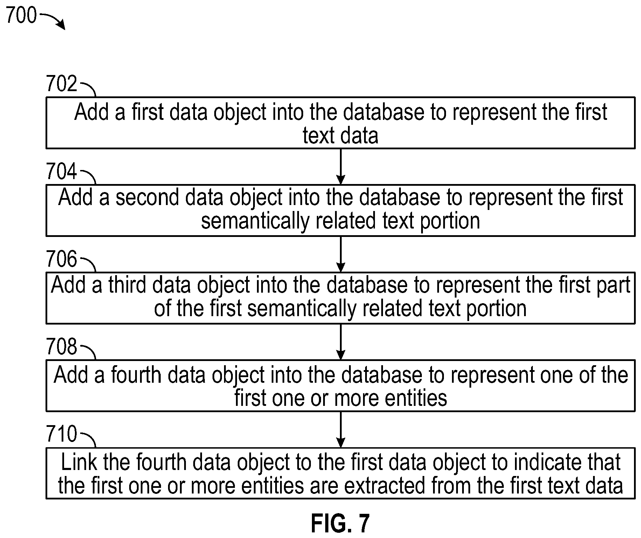

FIG. 7 is a flowchart illustrating an example method 700 for adding and linking data objects into a database to represent entity related information, according to various implementations of the present disclosure. The method 700 may be implemented, for example, by the entity processing system 102 of FIGS. 1 and 2A to enrich the database module 108 and link data objects stored in the database 109. In various implementations, at least some blocks (e.g., blocks 702, 704, 706, and 708) of the method 700 may be performed concurrently and/or sequentially.

At block 702, the entity processing system 102 may add a first data object into a database to represent the first text data. For example, the entity processing pipeline 110 may add the first data object (e.g., a "text data" data object) into the database 109 to represent the first text data.

At block 704, the entity processing system 102 may add a second data object into a database to represent the first semantically related text portion. For example, the entity processing pipeline 110 may add the second data object (e.g., a "semantically related text portion" data object) into the database 109 to represent the first semantically related text portion of the first text data.

At block 706, the entity processing system 102 may add a third data object into a database to represent the first part of the first semantically related text portion. For example, the entity processing pipeline 110 may add the third data object into the database 109 to represent the first part of the first semantically related text portion of the first text data.

At block 708, the entity processing system 102 may add a fourth data object into a database to represent one of the first one or more entities identified by the second output received at block 514. For example, the entity processing pipeline 110 may add the fourth data object into the database 109 to represent the one of the first one or more entities.

At block 710, the entity processing system 102 may link the fourth data object to the first data object. For example, the entity processing pipeline 110 may cause the database module 108 to link the fourth data object to the first data object to indicate that the first one or more entities are extracted from the first text data.

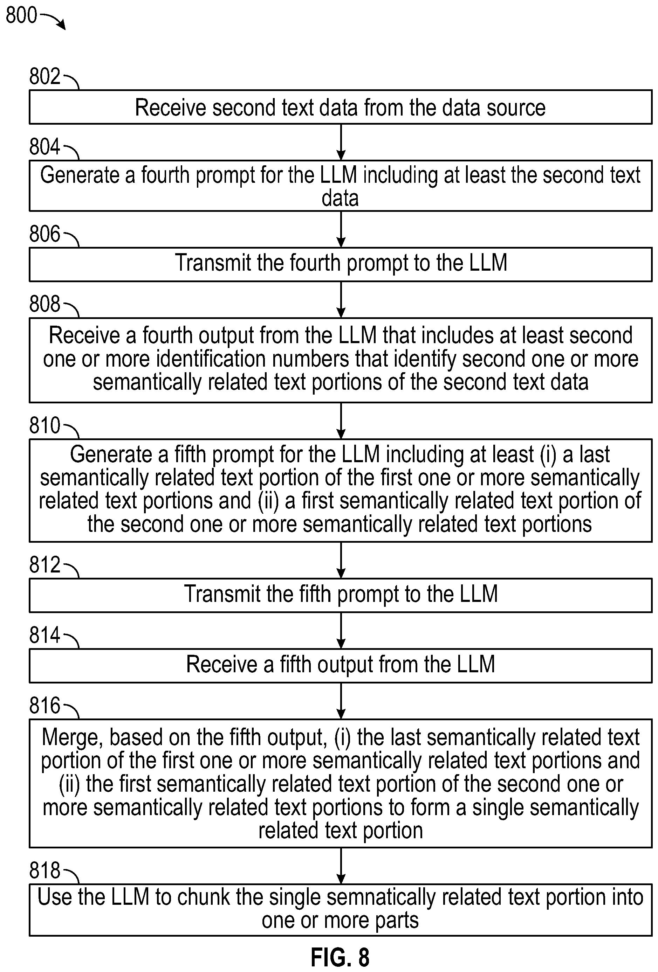

FIG. 8 depicts a flowchart illustrating an example method 800 according to various embodiments. The method 800 may be implemented, for example, by the entity processing system 102 of FIGS. 1 and 2A for utilizing one or more LLMs (e.g., the LLM 130a and/or the LLM 130b) to merge semantically related text portions from various text data to extract and resolve entities from unstructured text data received from the data source 120. In various implementations, the method 800 may be performed in part or in full by the entity processing system 102.

At block 802, the entity processing pipeline 110 (e.g., the text segmentation module 212) may receive second text data (e.g., unstructured data) from the data source 120. In some implementations, the second text data can be similar to the first text data received at block 502, and the second text data may immediately follow the first text data in an audio transcript.

At block 804, the entity processing pipeline 110 may generate a fourth prompt for a LLM. For example, the text segmentation module 212 may generate the fourth prompt for the LLM 130, where the fourth prompt may include at least the second text data.

At block 806, the entity processing pipeline 110 may transmit the fourth prompt to the LLM. For example, the text segmentation module 212 may transmit the fourth prompt including at least the second text data to the LLM 130.

At block 808, the entity processing pipeline 110 may receive a fourth output that identifies second one or more semantically related text portions of the second text data. For example, the text segmentation module 212 may receive the fourth output including at least second one or more identification numbers that identify second one or more semantically related text portions of the second text data. Each of the second one or more semantically related text portions may correspond to a single topic discussed in the audio transcript. For example, the fourth output may include index [35], index [42], and index [45] to indicate that text of the second text data between index [35] and index [42] is associated with a topic discussed in the audio transcript, and text between index [42] and index [45] is associated with another topic discussed in the audio transcript.

At block 810, the entity processing pipeline 110 (e.g., the text segmentation module 212) may generate a fifth prompt for the LLM. The fifth prompt may include at least a last semantically related text portion of the first one or more semantically related text portions, and a first semantically related text portion of the second one or more semantically related text portions. For example, as noted above, outputs from the LLM 130 may identify first one or more semantically related text portions of the first text data and second one or more semantically related text portions of the second text data, where the second text data immediately follows the first text data in the audio transcript. The text segmentation module 212 may generate the fifth prompt to the LLM 130 that includes at least a last semantically related text portion (e.g., a text portion identified by and after the index [32]) of the first one or more semantically related text portions and a first semantically related text portion (e.g., a text portion identified by and before the index [35]) of the second one or more semantically related text portions.

At block 812, the entity processing pipeline 110 may transmit the fifth prompt to the LLM. For example, the text segmentation module 212 may transmit the fifth prompt to the LLM 130.

In response to the prompt, at block 814, the text segmentation module 212 may receive a fifth output from the LLM. For example, the LLM 130 may generate the fifth output indicating that the last semantically related text portion of the first one or more semantically related text portions and the first semantically related text portion of the second one or more semantically related text portions are semantically related with each other (e.g., associated with a single topic discussed in the audio transcript).

At block 816, the entity processing pipeline 110 may merge the last semantically related text portion of the first one or more semantically related text portions and the first semantically related text portion of the second one or more semantically related text portions to form a single semantically related text portion. For example, based on the fifth output, the text segmentation module 212 may merge the last semantically related text portion of the first one or more semantically related text portions and the first semantically related text portion of the second one or more semantically related text portions to form a single semantically related text portion.

At block 818, the entity processing pipeline 110 may use the LLM to chunk the single semantically related text portion into one or more parts. For example, the text segmentation module 212 may employ the LLM 130 to chunk, based on a context window associated with the LLM 130, the single semantically related text portion into one or more parts for further analysis (e.g., entity extraction and resolution associated with the one or more parts). Advantageously, the method 800 enables the entity processing pipeline 110 to fully and/or more flexibly merge segments of the audio transcript that correspond to the same topic for achieving more accurate entity extraction and resolution.

### Additional Example Implementations and Details

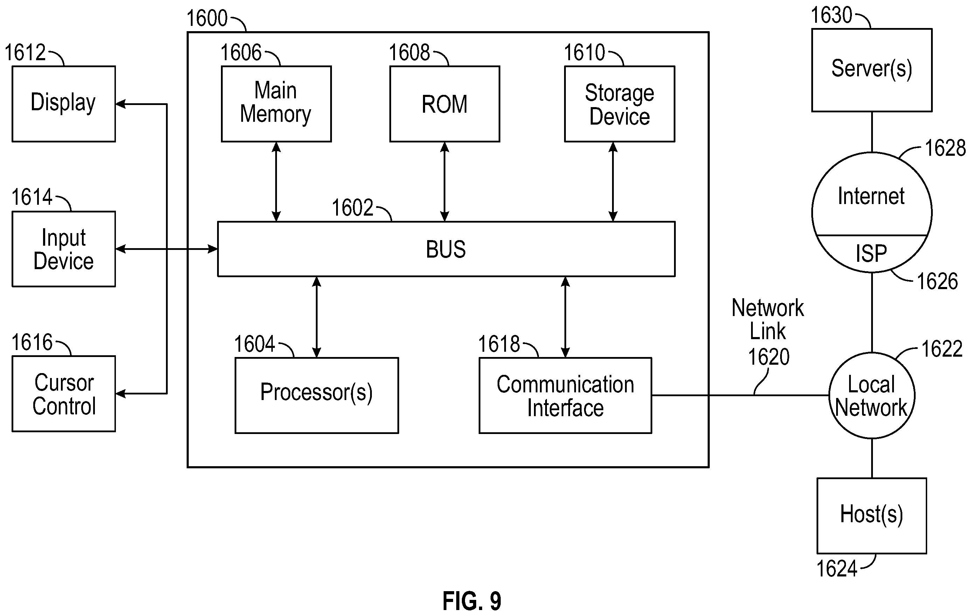

In an implementation of the system (e.g., one or more aspects of the entity processing system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 9) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In various implementations the virtual computing environment may comprise one or more virtual machines, containers, and/or other types of emulations of computing systems or environments. In various implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In various implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In various alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in various implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 9 shows a block diagram that illustrates a computer system 1600 upon which various implementations and/or aspects (e.g., one or more aspects of the computing environment 100, one or more aspects of the entity processing system 102, one or more aspects of the user device 150, one or more aspects of the LLMs 130a and 130b, and/or the like) may be implemented. Multiple such computer systems 1600 may be used in various implementations of the present disclosure. Computer system 1600 includes a bus 1602 or other communication mechanism for communicating information, and a hardware processor, or multiple processors, 1004 coupled with bus 1602 for processing information. Hardware processor(s) 1604 may be, for example, one or more general purpose microprocessors.

Computer system 1600 also includes a main memory 1606, such as a random-access memory (RAM), cache and/or other dynamic storage devices, coupled to bus 1602 for storing information and instructions to be executed by processor 1604. Main memory 1606 also may be used for storing temporary variables or other intermediate information during execution of instructions to be executed by processor 1604. Such instructions, when stored in storage media accessible to processor 1604, render computer system 1600 into a special-purpose machine that is customized to perform the operations specified in the instructions. The main memory 1606 may, for example, include instructions to implement server instances, queuing modules, memory queues, storage queues, user interfaces, and/or other aspects of functionality of the present disclosure, according to various implementations.

Computer system 1600 further includes a read only memory (ROM) 1608 or other static storage device coupled to bus 1602 for storing static information and instructions for processor 1604. A storage device 1610, such as a magnetic disk, optical disk, or USB thumb drive (Flash drive), and/or the like, is provided and coupled to bus 1602 for storing information and instructions.

Computer system 1600 may be coupled via bus 1602 to a display 1612, such as a cathode ray tube (CRT) or LCD display (or touch screen), for displaying information to a computer user. An input device 1614, including alphanumeric and other keys, is coupled to bus 1602 for communicating information and command selections to processor 1604. Another type of user input device is cursor control 1616, such as a mouse, a trackball, or cursor direction keys for communicating direction information and command selections to processor 1604 and for controlling cursor movement on display 1612. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1600 may include a user interface module to implement a GUI that may be stored in a mass storage device as computer executable program instructions that are executed by the computing device(s). Computer system 1600 may further, as described below, implement the techniques described herein using customized hard-wired logic, one or more ASICs or FPGAs, firmware and/or program logic which in combination with the computer system causes or programs computer system 1600 to be a special-purpose machine. According to one implementation, the techniques herein are performed by computer system 1600 in response to processor(s) 1604 executing one or more sequences of one or more computer-readable program instructions contained in main memory 1606. Such instructions may be read into main memory 1606 from another storage medium, such as storage device 1610. Execution of the sequences of instructions contained in main memory 1606 causes processor(s) 1604 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1604 for execution. For example, the instructions may initially be carried on a magnetic disk or solid-state drive of a remote computer. The remote computer can load the instructions into its dynamic memory and send the instructions over a telephone line using a modem. A modem local to computer system 1600 can receive the data on the telephone line and use an infra-red transmitter to convert the data to an infra-red signal. An infra-red detector can receive the data carried in the infra-red signal and appropriate circuitry can place the data on bus 1602. Bus 1602 carries the data to main memory 1606, from which processor 1604 retrieves and executes the instructions. The instructions received by main memory 1606 may optionally be stored on storage device 1610 either before or after execution by processor 1604.

Computer system 1600 also includes a communication interface 1618 coupled to bus 1602. Communication interface 1618 provides a two-way data communication coupling to a network link 1620 that is connected to a local network 1622. For example, communication interface 1618 may be an integrated services digital network (ISDN) card, cable modem, satellite modem, or a modem to provide a data communication connection to a corresponding type of telephone line. As another example, communication interface 1618 may be a local area network (LAN) card to provide a data communication connection to a compatible LAN (or WAN component to communicated with a WAN). Wireless links may also be implemented. In any such implementation, communication interface 1618 sends and receives electrical, electromagnetic, or optical signals that carry digital data streams representing various types of information.

Network link 1620 typically provides data communication through one or more networks to other data devices. For example, network link 1620 may provide a connection through local network 1622 to a host computer 1624 or to data equipment operated by an Internet Service Provider (ISP) 1026. ISP 1626 in turn provides data communication services through the worldwide packet data communication network now commonly referred to as the "Internet" 1028. Local network 1622 and Internet 1628 both use electrical, electromagnetic, or optical signals that carry digital data streams. The signals through the various networks and the signals on network link 1620 and through communication interface 1618, which carry the digital data to and from computer system 1600, are example forms of transmission media.

Computer system 1600 can send messages and receive data, including program code, through the network(s), network link 1620 and communication interface 1618. In the Internet example, a server 1630 might transmit a requested code for an application program through Internet 1628, ISP 1626, local network 1622 and communication interface 1618.

The received code may be executed by processor 1604 as it is received, and/or stored in storage device 1610, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more computer-readable storage devices storing software instructions executable by the computing system, the computerized method comprising:
receiving first text data from a data source;
generating a first prompt for a large language model ("LLM"), the first prompt comprising the first text data;
transmitting the first prompt to the LLM;
receiving a first output from the LLM in response to the first prompt, the first output comprising first one or more identification numbers that identify first one or more semantically related text portions of the first text data, the first one or more semantically related text portions comprising a first semantically related text portion;
generating, based at least on the first output, a second prompt for a large language model ("LLM"), the second prompt comprising (i) a first part of the first semantically related text portion and (ii) first one or more suggested entities associated with the first part of the first semantically related text portion;
transmitting the second prompt to the LLM; and
receiving a second output from the LLM in response to the second prompt, the second output comprising (i) first one or more entities extracted by the LLM from the first part of the first semantically related text portion and (ii) first metadata or context associated with the first one or more entities.

Clause 2. The computerized method of Clause 1, further comprising:
executing, using at least the first one or more entities, a first similarity search to identify first one or more similar entities from the first one or more entities extracted by the LLM.

Clause 3. The computerized method of Clause 2, further comprising:
generating a third prompt for the LLM, the third prompt comprising the first one or more similar entities;
transmitting the third prompt to the LLM; and
receiving a third output from the LLM in response to the third prompt, the third output comprising a first entity to which the first one or more similar entities correspond.

Clause 4. The computerized method of Clause 3, further comprising:
using the LLM to determine, based at least on the first entity, the first metadata or context, and a plurality of entities represented by a plurality of data objects stored in a database defined by an ontology, that the first entity matches an entity of the plurality of entities, the entity represented by a data object of the plurality of data objects; and
in response to determining that the first entity matches the entity of the plurality of entities, updating the data object stored in the database to represent at least the entity and the first entity.

Clause 5. The computerized method of Clause 4, further comprising:
executing, using at least the first entity, a second similarity search with reference to the ontology to determine that the plurality of entities represented by the plurality of data objects are more similar to the first entity than remaining entities represented by remaining data objects stored in the database.

Clause 6. The computerized method of Clause 3, further comprising:
using the LLM to determine, based at least on the first entity, the first metadata or context, and a plurality of entities represented by a plurality of data objects stored in a database defined by an ontology, that the first entity does not match any entity of the plurality of entities; and
in response to determining that the first entity does not match the any entity of the plurality of entities, adding into the database a data object to represent the first entity.

Clause 7. The computerized method of Clause 3, further comprising:
using the LLM to determine, based at least on the first entity, the first metadata or context, and a plurality of entities represented by a plurality of data objects stored in a database defined by an ontology, that the first entity does not match any entity of the plurality of entities;
in response to determining that the first entity does not match the any entity of the plurality of entities, generating a graph comprising at least a first node representing a first similar entity of the first one or more similar entities, a second node representing a second similar entity of the first one or more similar entities, and a first edge connecting the first node and the second node, the first edge representing a similarity between the first similar entity of the first one or more similar entities and the second similar entity of the first one or more similar entities; and
using the LLM to determine, based at least in part on the graph and the first metadata or context, whether the first one or more similar entities match any entity of the plurality of entities.

Clause 8. The computerized method of any of Clauses 1-7, wherein generating the first prompt comprises:
adding a first plurality of identification numbers into the first text data to identify a first plurality of portions of the first text data, the first plurality of identification numbers including at least the first one or more identification numbers.

Clause 9. The computerized method of Clause 8, further comprising removing the first plurality of identification numbers from the first text data.

Clause 10. The computerized method of any of Clauses 1-9, wherein generating the second prompt comprises:
chunking, based on a context window associated with the LLM, the first semantically related text portion into a plurality of parts that include at least the first part of the first semantically related text portion.

Clause 11. The computerized method of Clause 10, wherein generating the second prompt comprises:
generating, using a detection model, the first one or more suggested entities associated with the first part of the first semantically related text portion.

Clause 12. The computerized method of Clause 11, wherein generating the second prompt comprises:
generating, using the detection model, first one or more attributes associated with the first one or more suggested entities,
wherein the second prompt comprises the first one or more attributes.

Clause 13. The computerized method of Clause 12, wherein the second prompt indicates to the LLM that the first one or more attributes associated with the first one or more suggested entities are prone to error.

Clause 14. The computerized method of any of Clauses 1-13, further comprising adding into a database:
a first data object representing the first text data;
a second data object representing the first semantically related text portion of the first one or more semantically related text portions;
a third data object representing the first part of the first semantically related text portion; and
a fourth data object representing one of the first one or more entities.

Clause 15. The computerized method of Clause 14, further comprising:
linking the fourth data object to the first data object in the database to indicate that the first one or more entities are extracted from the first text data.

Clause 16. The computerized method of any of Clauses 1-15, further comprising:
receiving second text data from the data source;
generating a fourth prompt for the LLM, the fourth prompt comprising the second text data;
transmitting the fourth prompt to the LLM; and
receiving a fourth output from the LLM in response to the fourth prompt, the fourth output comprising second one or more identification numbers that identify second one or more semantically related text portions of the second text data, the second one or more semantically related text portions comprising a second semantically related text portion,
wherein the first text data and the second text data form at least a portion of an audio transcript, and wherein the second text data immediately follows the first text data in the audio transcript.

Clause 17. The computerized method of Clause 16, further comprising:
generating a fifth prompt for the LLM, the fifth prompt comprising a last semantically related text portion of the first one or more semantically related text portions and a first semantically related text portion of the second one or more semantically related text portions;
transmitting the fifth prompt to the LLM; and
receiving a fifth output from the LLM in response to the fifth prompt, the fifth output indicating that (i) the last semantically related text portion of the first one or more semantically related text portions and (ii) the first semantically related text portion of the second one or more semantically related text portions are semantically related with each other.

Clause 18. The computerized method of Clause 17, further comprising:
merging (i) the last semantically related text portion of the first one or more semantically related text portions and (ii) the first semantically related text portion of the second one or more semantically related text portions to form a single semantically related text portion; and
using the LLM to chunk, based on a context window associated with the LLM, the single semantically related text portion into one or more parts.

Clause 19. The computerized method of any of Clauses 1-18, wherein each of the first one or more semantically related text portions corresponds to a single topic discussed in an audio transcript.

Clause 20. The computerized method of any of Clauses 1-19, wherein the first text data comprises unstructured text.

Clause 21. The computerized method of any of Clauses 1-20, wherein the first prompt and the second prompt are compatible with a JavaScript Object Notation ("JSON") format.

Clause 22. A system comprising:
one or more computer-readable storage mediums or devices comprising, configured to store, and/or storing program instructions; and
one or more processors configured to execute the program instructions to cause the system to perform the computerized method of any of Clauses 1-21.

Clause 23. One or more computer-readable storage mediums or devices comprising, configured to store, and/or storing program instructions, the program instructions executable by one or more processors to cause the one or more processors to perform the computerized method of any of Clauses 1-21.

## Claims

1. A computerized method, performed by a computing system having one or more hardware computer processors and one or more computer-readable storage devices storing software instructions executable by the computing system, the computerized method comprising:
receiving first text data from a data source;
generating a first prompt for a large language model ("LLM"), the first prompt comprising the first text data;
transmitting the first prompt to the LLM;
receiving a first output from the LLM in response to the first prompt, the first output comprising first one or more identification numbers that identify first one or more semantically related text portions of the first text data, the first one or more semantically related text portions comprising a first semantically related text portion;
generating, based at least on the first output, a second prompt for a large language model ("LLM"), the second prompt comprising (i) a first part of the first semantically related text portion and (ii) first one or more suggested entities associated with the first part of the first semantically related text portion;
transmitting the second prompt to the LLM; and
receiving a second output from the LLM in response to the second prompt, the second output comprising (i) first one or more entities extracted by the LLM from the first part of the first semantically related text portion and (ii) first metadata or context associated with the first one or more entities.

2. The computerized method of Claim 1, further comprising:
executing, using at least the first one or more entities, a first similarity search to identify first one or more similar entities from the first one or more entities extracted by the LLM.

3. The computerized method of Claim 2, further comprising:
generating a third prompt for the LLM, the third prompt comprising the first one or more similar entities;
transmitting the third prompt to the LLM; and
receiving a third output from the LLM in response to the third prompt, the third output comprising a first entity to which the first one or more similar entities correspond.

4. The computerized method of Claim 3, further comprising:
using the LLM to determine, based at least on the first entity, the first metadata or context, and a plurality of entities represented by a plurality of data objects stored in a database defined by an ontology, that the first entity matches an entity of the plurality of entities, the entity represented by a data object of the plurality of data objects;
in response to determining that the first entity matches the entity of the plurality of entities, updating the data object stored in the database to represent at least the entity and the first entity;
and, preferably, further comprising:
executing, using at least the first entity, a second similarity search with reference to the ontology to determine that the plurality of entities represented by the plurality of data objects are more similar to the first entity than remaining entities represented by remaining data objects stored in the database.

5. The computerized method of Claim 3, further comprising:
using the LLM to determine, based at least on the first entity, the first metadata or context, and a plurality of entities represented by a plurality of data objects stored in a database defined by an ontology, that the first entity does not match any entity of the plurality of entities; and
in response to determining that the first entity does not match the any entity of the plurality of entities, adding into the database a data object to represent the first entity.

6. The computerized method of Claim 3, further comprising:
using the LLM to determine, based at least on the first entity, the first metadata or context, and a plurality of entities represented by a plurality of data objects stored in a database defined by an ontology, that the first entity does not match any entity of the plurality of entities;
in response to determining that the first entity does not match the any entity of the plurality of entities, generating a graph comprising at least a first node representing a first similar entity of the first one or more similar entities, a second node representing a second similar entity of the first one or more similar entities, and a first edge connecting the first node and the second node, the first edge representing a similarity between the first similar entity of the first one or more similar entities and the second similar entity of the first one or more similar entities; and
using the LLM to determine, based at least in part on the graph and the first metadata or context, whether the first one or more similar entities match any entity of the plurality of entities.

7. The computerized method of any preceding Claim, wherein generating the first prompt comprises:
adding a first plurality of identification numbers into the first text data to identify a first plurality of portions of the first text data, the first plurality of identification numbers including at least the first one or more identification numbers.

8. The computerized method of any preceding Claim, wherein generating the second prompt comprises:
chunking, based on a context window associated with the LLM, the first semantically related text portion into a plurality of parts that include at least the first part of the first semantically related text portion;
and, preferably, wherein generating the second prompt comprises:
generating, using a detection model, the first one or more suggested entities associated with the first part of the first semantically related text portion.

9. The computerized method of Claim 8, wherein generating the second prompt comprises:
generating, using the detection model, first one or more attributes associated with the first one or more suggested entities,
wherein the second prompt comprises the first one or more attributes,
and, preferably, wherein the second prompt indicates to the LLM that the first one or more attributes associated with the first one or more suggested entities are prone to error.

10. The computerized method of any preceding Claim, further comprising adding into a database:
a first data object representing the first text data;
a second data object representing the first semantically related text portion of the first one or more semantically related text portions;
a third data object representing the first part of the first semantically related text portion;
a fourth data object representing one of the first one or more entities;
and, preferably, further comprising:
linking the fourth data object to the first data object in the database to indicate that the first one or more entities are extracted from the first text data.

11. The computerized method of any preceding Claim, further comprising:
receiving second text data from the data source;
generating a fourth prompt for the LLM, the fourth prompt comprising the second text data;
transmitting the fourth prompt to the LLM; and
receiving a fourth output from the LLM in response to the fourth prompt, the fourth output comprising second one or more identification numbers that identify second one or more semantically related text portions of the second text data, the second one or more semantically related text portions comprising a second semantically related text portion,
wherein the first text data and the second text data form at least a portion of an audio transcript, and wherein the second text data immediately follows the first text data in the audio transcript.

12. The computerized method of Claim 11, further comprising:
generating a fifth prompt for the LLM, the fifth prompt comprising a last semantically related text portion of the first one or more semantically related text portions and a first semantically related text portion of the second one or more semantically related text portions;
transmitting the fifth prompt to the LLM;
receiving a fifth output from the LLM in response to the fifth prompt, the fifth output indicating that (i) the last semantically related text portion of the first one or more semantically related text portions and (ii) the first semantically related text portion of the second one or more semantically related text portions are semantically related with each other;
and, preferably, further comprising:
merging (i) the last semantically related text portion of the first one or more semantically related text portions and (ii) the first semantically related text portion of the second one or more semantically related text portions to form a single semantically related text portion; and
using the LLM to chunk, based on a context window associated with the LLM, the single semantically related text portion into one or more parts.

13. The computerized method of any preceding Claim, wherein at least one of:
each of the first one or more semantically related text portions corresponds to a single topic discussed in an audio transcript;
the first text data comprises unstructured text; or
the first prompt and the second prompt are compatible with a JavaScript Object Notation ("JSON") format.

14. A system comprising:
one or more computer-readable storage mediums storing program instructions; and
one or more processors configured to execute the program instructions to cause the system to perform the computerized method of any preceding Claim.

15. One or more computer-readable storage mediums storing program instructions, the program instructions executable by one or more processors to cause the one or more processors to perform the computerized method of any preceding Claim.
